# EUROPEAN PATENT SPECIFICATION

(11) **EP 0 335 195 B1**
(45) Date of publication and mention of the grant of the patent: **15.12.1993**
(21) Application number: 89104743.3
(22) Date of filing: 16.03.1989
(51) Int. Cl.: C01B 33/148, C01B 33/145

(54) **Silica sol containing elongated-shaped particles and method for preparing the same**
Länglich geformte Teilchen enthaltendes Kieselsäuresol sowie Verfahren zur Herstellung desselben
Sol de silice contenant des particules de forme allongée et son procédé de préparation

(30) Priority: 16.03.1988 JP 62849/88
(43) Date of publication of application: 04.10.1989
(73) Proprietor: NISSAN CHEMICAL INDUSTRIES LTD., Chiyoda-ku Tokyo (JP)
(72) Inventor: Watanabe, Yoshitane c/o Nissan Chemical Ind., Ltd., Funabashi-shi Chiba-ken (JP); Ando, Mikio c/o Nissan Chemical Ind., Ltd., Funabashi-shi Chiba-ken (JP); Tanimoto, Kenji c/o Nissan Chemical Ind., Ltd., Funabashi-shi Chiba-ken (JP); Kagamimiya, Tsutomu c/o Nissan Chemical Ind., Ltd., Sodegaura-cho Kimitsu-shi Chiba-ken (JP); Kawashima, Makoto c/o Nissan Chemical Ind., Ltd., Sodegaura-cho Kimitsu-shi Chiba-ken (JP)
(74) Representative: Hansen, Bernd, Dr. Dipl.-Chem.

(56) References cited:
- US-A- 2 680 721
- US-A- 2 900 348

## Description

### BACKGROUND OF THE INVENTION

### Field of the Invention

The present invention relates to a novel silica sol and a method for preparing the same. Specifically, the novel silica sol is characterized by a particular shape of colloidal silica particle and displays an excellent filming or coating property after being coated and dried on a solid article and therefore it is utilized as a coating composition and in other various fields.

### Description of Related Art

A silica sol has a general property that it finally gels from its low viscosity state via its high viscosity state. Accordingly, for silica sol products having the same SiO₂ content, ones having a lower viscosity are evaluated to have a higher stability than others having a higher viscosity. In addition, silica sol containing colloidal silica particles with a more spherical shape has been known to have a lower viscosity. Under this situation, there have heretofore been various proposals for efficiently preparing spherical colloidal silica sols, but there is no proposal up to the present for improving the characteristic of a silica sol by controlling the shape of the colloidal silica particles as dispersed in the silica sol to be non-spherical.

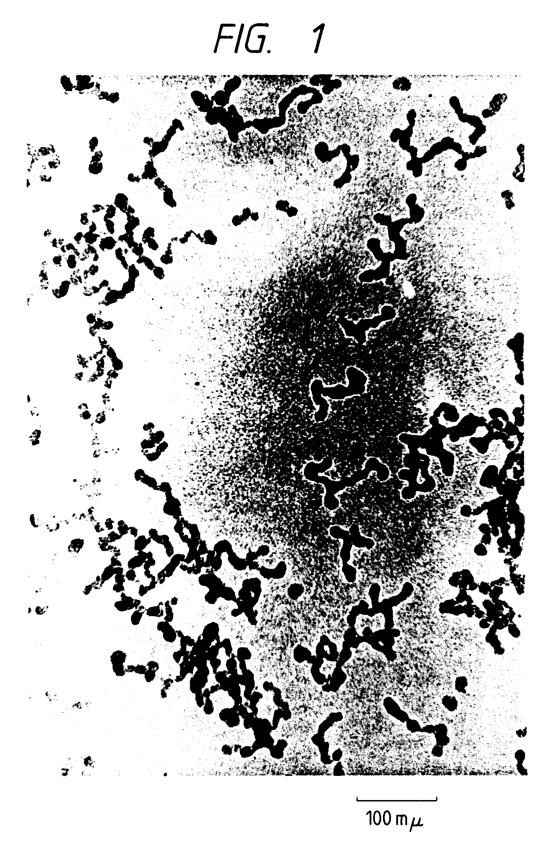

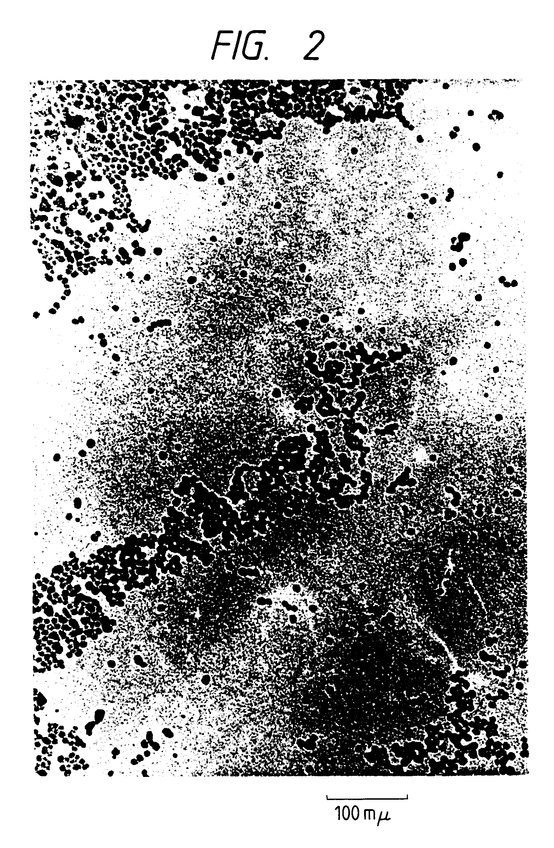

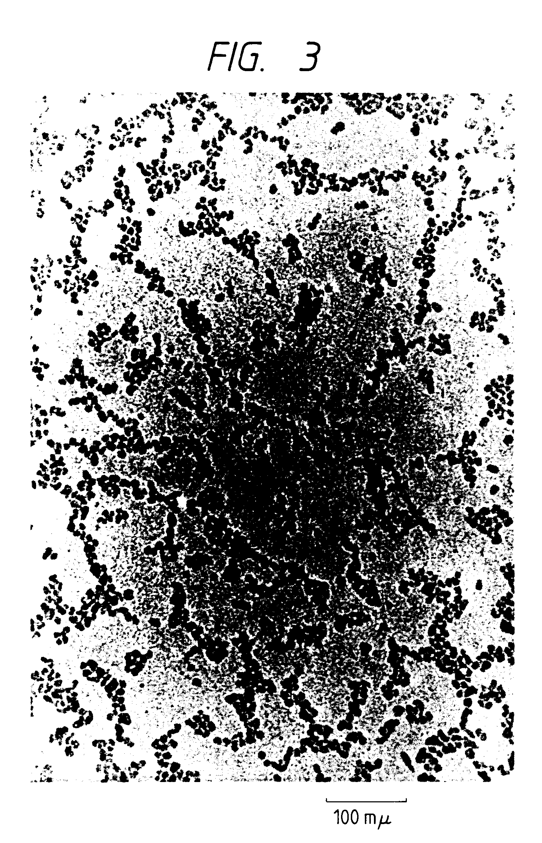

Regarding the shape of the conventional colloidal silica particles, U.S. Patent No. 2,680,721 mentions three typical types of particles in the drawings as attached thereto. The first is a spherical one as mentioned above, which is shown in Fig. 1 thereof; the second is a non-spherical one having a ratio of the major axis to the minor axis of almost from 2 to 3, which is shown in Fig. 2, bottom view thereof; and the third is an amorphous one, which is shown in Fig. 3, bottom view thereof. The random-shaped particles of the third type are ones resulting from growth of the fragments formed by cleavage of the chain of a three-dimensional network structure of particles of very small size derived from chain-like linkage of smaller silica particles, as so explained in the said U.S. Patent No. 2,680,721. When attention is paid to one particle of such type, it is noted that it has a non-spherical shape but the shape is not controlled.

The above-mentioned U.S. Patent No. 2,680,721 has disclosed a method of forming a silica sol comprising spherical colloidal silica particles where a monovalent base is added to spherical silica sol having a diameter of 5 nm or more so that the pH value of the sol may be within the range of from 7 to 10.5 and the sol is heated at 160 to 300 °C in the absence of electrolytes.

U.S. Patent No. 2,900,348 has disclosed a method of forming a silica sol where a gel formed by adding an acid to an aqueous solution of water glass is washed with water, an alkali is added to the gel so that the gel may have a pH value of from 9 to 9.5, and the gel is then heated at 95 to 100 °C. The said method is a so-called peptization method, and the silica sol prepared by the method has a shape of the above-mentioned second or third type.

Silica sols comprising spherical colloidal silica particles having a particle diameter of from 4 to 150 nm are highly stable and are therefore used in various fields. However, the spherical particles which give good dispersibility to the sol would often have some practical problems in that they frequently cause cracking of the film to be formed from the silica sol-containing composition and migration of colloidal silica particles is generated in a composition comprising the silica sol and ceramic fibers when the composition is dried so that dusting on the surface of the dried article is frequently caused. In order to solve such problems, a means of adding some other components to the silica sol has been employed, but sufficient improvement to the problems has not been attained.

The silica sol obtainable by the said conventional peptization method does not have a sufficient stability, and, as the case may be, it would often form a precipitate of silica during storage thereof. Although the colloidal silica particles in the said sol are non-spherical, they also have the same problems as those in the case of the silica sol comprising the above-mentioned spherical colloidal silica particles.

### SUMMARY OF THE INVENTION

One object of the present invention is to provide stable silica sols having improved properties by modifying the shape of colloidal silica particles.

Another object of the present invention is to provide a method to efficiently prepare such improved silica sol.

The silica sol of the present invention is stable and has an SiO₂ concentration of 40 % by weight or less. The sol contains amorphous colloidal silica particles dispersed in a liquid medium, and the shape of the particles is characterized in that the particles each have a particle size (D₁) of from 40 to 500 nm, as measured by dynamic light-scattering method, and, when observed with an electronic microscope, they each have an elongated shape elongated in only one plane and having a uniform thickness along the elongation to fall within the range of from 5 to 40 nm. The elongation degree of the particles according to the present invention, is further defined in terms of the size ratio D₁/D₂, where D₂ means the particle diameter (D₂ nm) as calculated from the formula of D₂ = 2720/S in which S represents a specific surface area (m²/g) of the particles measured by nitrogen gas-adsorbing method (hereinafter referred to as BET method) and the silica sol of the present invention has a value of from 5 to 30 of the elongation degree in terms of D₁/D₂.

As one embodiment of the present invention, the colloidal silica sol, in which each particle has a thickness of from 5 to 20 nm, as measured with an electronic microscope and a particle size of from 40 to 300 nm as measured by dynamic light-scattering method and the ratio of D₁/D₂ is from 5 to 30, is efficiently prepared by a method comprising the following steps (a), (b) and (c):
(a) mixing an aqueous solution containing a water-soluble calcium salt or magnesium salt or a mixture of the calcium salt and the magnesium salt with an aqueous colloidal liquid of an active silicic acid containing from 1 to 6 % by weight of SiO₂ and having a pH value of from 2 to 5 in an amount of from 1500 to 8500 ppm as a weight ratio of CaO or MgO or a mixture of CaO and MgO with respect to SiO₂ of the active silicic acid;
(b) mixing an alkali metal hydroxide or a water-soluble organic base or a water-soluble silicate of the alkali metal hydroxide and organic base with the aqueous solution obtained in step (a) in a molar ratio of SiO₂/M₂O from 20 to 200, where SiO₂ indicates the total silica content derived from the active silicic acid and the silica content of the silicate, and M indicates the alkali metal atom or organic base molecule; and
(c) heating the mixture obtained in step (b) at 60 to 250 °C for 0.5 to 40 hours.

As another embodiment of the present invention, the silica sol containing the colloidal silica particles the same as or larger than those in the silica sol obtainable by the first method, in which each particle has a thickness of from 5 to 40 nm as measured with an electronic microscope and has a particle size of from 40 to 500 nm as measured by dynamic light-scattering method and the ratio of D₁/D₂ is from 5 to 30, is efficiently prepared by a method comprising the following steps (a'), (b') and (c'):
(a') mixing an aqueous solution containing a water-soluble calcium salt or magnesium salt or a mixture of the calcium salt and the magnesium salt with an aqueous acidic silica sol containing colloidal silica particles having an average particle size of from 3 to 30 nm in a content of from 0.5 to 25 % by weight of SiO₂ and having a pH value of from 1 to 5, in an amount of from 0.15 to 1.00 % by weight of CaO, MgO or a mixture of CaO and MgO to SiO₂ of the acidic sol;
(b') mixing an alkali metal hydroxide or a water-soluble organic base or a water-soluble silicate of the alkali metal hydroxide and organic base with the liquid as obtained in step (a') in a molar ratio of SiO₂/M₂O from 20 to 300, where SiO₂ indicates the total silica content derived from the said acidic silica sol and the silica content derived from the silicate, and M indicates the alkali metal atom or organic base molecule; and
(c') heating the mixture obtained in step (b') at 60 to 300 °C for 0.5 to 40 hours.

### BRIEF DESCRIPTION OF THE DRAWINGS

Figure 1 is a 200,000 magnification-transmission electro-microscopic photograph showing the particle structure of the colloidal silica of the concentrated sol obtained in Example 1 of the present invention.

Figure 2 is a 200,000 magnification-transmission electro-microscopic photograph showing the particle structure of the colloidal silica of the concentrated sol obtained in Comparative Example 1.

Figure 3 is a 200,000 magnification-transmission electro-microscopic photograph showing the particle structure of the colloidal silica of the concentrated sol obtained in Comparative Example 2.

Figure 4 is a 200,000 magnification-transmission electro-microscopic photograph showing the particle structure of the colloidal silica of the sol, before concentration, of the present invention obtained in Example 14.

### DETAILED DESCRIPTION OF THE INVENTION

With reference to Fig. 1, the shape of the colloidal silica particles in the sol of the present invention can be observed in a photograph taken with an electronic microscope. A number of the colloidal silica particles in the sol commonly have an elongated shape, although the shape thereof is not limited to be the same. The numerous colloidal silica particles are roughly classified into four groups of shapes; the first almost straight, the second angled, the third branched and the forth having ring, though the proportions thereof are difficult to be represented by accurate numerals. In accordance with the photograph, however, it is noted that the amounts of the angled type and the branched type occupy major portions of the sol. When attention is paid to one particle, it is noted that the thickness of the particle from one end to the other end is almost uniform along the elongation. Such uniform thickness of the particle is caused by the method of the preparation of the sol, and the thickness itself of the particle also is controlled by the process for the preparation of the sol based upon the experimental rule in the preparation. A number of colloidal silica particles in the sol prepared by a determined method have an almost determined thickness. The thickness of the colloidal silica particles of the sol obtainable by the method of the present invention falls within the range of from 5 to 40 nm. However, the length of the numerous colloidal silica particles in the sol as prepared by a determined method is not determined. From the photograph in Fig. 1 showing the particles, it is noted that the length of the particles is 3 times or more of the thickness thereof, and in general, almost all the particles in the sol have a length which is several times to several tens of times of the thickness thereof.

The colloidal silica particles in the sol of the present invention have, in addition to the elongation, another characteristic feature. That is, the elongation of each particle in the sol exists in the same plane, irrespective of the shapes. Accordingly, all the particles, even though they have different shapes, may be laid on the same plane with the height corresponding to the thickness of the particles, provided that the particles do not overlap with one another. As shown in Fig. 1, in the electro-microscopic photograph of the colloidal silica particles in the sol of the present invention, in general, it is noted that most of the colloidal silica particles overlap with one another and therefore one end and the other end of one particle hardly can be observed definitely so that the length of the particle could hardly be determined. In addition, according to the photograph in Fig. 1, it seems also difficult to determine whether or not the particle has also another elongation in the direction vertical to the plane as a three-dimensional structure. However, if the particle had such an elongation as a three-dimentional structure, the silica sol would display a characteristic property which is specific to the existence of a three-dimensional structure or a near structure, for example, an extremely high viscosity or non-fluidity, and therefore would be unstable.

As opposed to this, the sol of the present invention is a stable and middle-viscous liquid. Accordingly, it should be said that the colloidal silica particles in the sol of the present invention are not elongated in the three-dimensional direction. The plane in which the elongation of the colloidal particles of silica in the sol of the present invention exists, does not mean a purely or strictly mathematically one plane, but it is rather defined by the fact that the sol according to the present invention does not display the characteristic property which is specific to a silica sol containing colloidal silica particles having a three-dimensional structure or a near structure.

The size of such colloidal particles in the sol of the present invention is inappropriate to be represented by the length which could be presumed from the photograph in Fig. 1 of the colloidal particles of silica sol but it is appropriate to be represented by the value as measured by dynamic light-scattering method where the particle size may be determined as one corresponding to the length of the particle. The particle size of the colloidal silica particles in the sol of the present invention is from 40 to 500 nm, as the mean value measured by dynamic light-scattering method. The method of measuring the particle size by dynamic light-scattering method is explained in detail in Journal of Chemical Physics, Vol. 57, No. 11 (December 1972), page 4814. For instance, the particle diameter may easily be determined by the use of a commercial apparatus N₄ (sold by Coulter Co., USA) for dynamic light-scattering method. The particle size (D₂ nm) as calculated from the formula of D₂ = 2720/S where S means a specific surface area (m²/g) of the particles to be measured by a conventional BET method, means the size of the suppositional spherical colloidal silica particles having the same specific surface area S (m²/g) as that of the elongated colloidal silica particles. Accordingly, the ratio D₁/D₂ of the particle size (D₁ nm), as measured by the aforesaid dynamic light-scattering method, to the particle size (D₂ nm) represents the elongation degree of the elongated-shaped colloidal silica particle. Since the colloidal particles of amorphous silica in the sol of the present invention, in general, have a specific surface area of about 45 to 450 m²/g, D₂ is calculated as from 6 to 60 nm, and usually the colloidal particles of amorphous silica of the invention have a value of 5 to 30 as the degree of elongation.

The colloidal silica particles in the sol of the present invention contain a small amount (generally from 1500 to 10000 ppm by weight or so of SiO₂ in the sol) of a calcium or magnesium oxide or a mixture thereof, which is derived from the method of preparing the sol, but the colloidal silica particles essentially consist of amorphous silica. As the case may be, the particles may further contain, in addition to the calcium or magnesium oxide or the mixture thereof, a small amount of oxides of other polyvalent metals. The total amount of the calcium oxide, magnesium oxide and other polyvalent metal oxides is to be from 1500 to 15000 ppm or so by weight of SiO₂ in the sol. Of the polyvalent metals other than calcium and magnesium, there may concretely be mentioned II-valent metals such as Sr, Ba, Zn, Sn, Pb, Cu, Fe, Ni, Co and Mn, III-valent metals such as Al, Fe, Cr, Y and Ti, and IV-valent metals such as Ti, Zr and Sn.

The silica sol of the present invention generally contains 40 % by weight or less, preferably from 5 to 30 % by weight, of SiO₂. The sol has a higher viscosity with increase of the SiO₂ content in the sol, and when the SiO₂ content in the sol is 30 % by weight or less, the sol has a viscosity of from several mPa.s (cp) to 500 mPa.s (cp) or so. The sol has an extremely high stability and the sol involves neither precipitation of silica therein nor increase of the viscosity thereof during storage. The sol may have any one of water, organic solvent and solutions of water and a water-soluble organic solvent, as its medium. In any one of the aqueous sols having water as its medium and the organosol having an organic solvent as its medium, the colloidal silica particles are active because of the silanol group existing on the surface of the colloidal silica particle, and after removal of the solvent, the sol finally and irreversibly changes to a gel. As the organic solvents to be used as a medium of the organo-silica sol, any and every conventional one which does not interfere with the activity of the colloidal silica particles can be used. For instance, such solvents include alcohols such as methanol, ethanol, isopropanol and butanol, polyhydric alcohols such as ethylene glycol, ethers such as dimethyl ether and monomethyl ether of ethylene glycol, hydrocarbon solvents such as toluene and xylene, as well as dimethylacetamine, dimethylformamide and so on.

The silica sol of the present invention, in which the colloidal silica particles have a thickness of from 5 to 20 nm and have a particle size of from 40 to 300 nm as measured by dynamic light-scattering method, is first obtained as an alkaline aqueous silica sol, via the above-mentioned steps (a), (b) and (c). The colloidal aqueous liquid of an active silicic acid to be used in the step (a) is a liquid containing both a silicic acid and particles of a silicic acid polymer having a particle size of less than 3 nm, and it may easily be prepared by a known method. One preferred active silicic acid colloid-containing aqueous liquid is obtained by a conventional cationic exchange treatment of a diluted aqueous solution of a water-soluble silicate, for example, a water glass having a molar ratio of SiO₂/M₂O (where M indicates an alkali metal atom) from 1 to 4.5 or so, and generally, it contains SiO₂ in an amount of 6 % by weight or less, preferably from 1 to 6 % by weight, and has a pH value of 5 or less, preferably from 2 to 5. The pH value range of the liquid may easily be controlled, for example, by keeping back a part of the cations in the reaction system after cationic exchange treatment of the said water glass-containing aqueous solution, or by adding a small amount of an alkali metal hydroxide or a water-soluble organic base to the resulting active silicic acid-containing aqueous colloidal liquid after removal of all or a part of the cations from the cationic exchange treatment. The active silicic acid-containing aqueous colloidal liquid is unstable and has a property of easily gelling. Therefore, preferably the liquid does not contain any impurities which would accelerate the gelation and it is also preferable to use the liquid immediately after the preparation thereof. A more preferred active silicic acid-containing aqueous colloidal liquid may be obtained by introducing a diluted aqueous solution of a commercial product of sodium water glass having a molar ratio of SiO₂/Na₂O from 2 to 4 or so through a hydrogen type cationic exchange resin layer. The active silicic acid-containing aqueous colloidal liquid may contain any other components and may also contain a slight amount of any other cations and anions, provided that it gives a sol which satisfies the object of the present invention.

In step (a), a water-soluble calcium salt or magnesium salt or a mixture of the calcium salt and magnesium salt is mixed with the active silicic acid-containing aqeuous colloidal liquid, preferably as an aqueous solution thereof. The amount of the calcium salt, magnesium salt or the mixture of the calcium salt and the magnesium salt to be added is from 1500 to 8500 ppm by weight with regard to SiO₂ in the active silicic acid-containing aqueous colloidal liquid. Addition of such salt is preferably carried out with stirring. Although not specifically defined, the mixing temperature may be 2 to 50 °C and the mixing time may be 5 to 30 minutes. As examples of the calcium salt and magnesium salt to be added, there may be mentioned inorganic acid salts and organic acid salts of calcium and magnesium, such as calcium and magnesium chlorides, nitrates, sulfates, sulfamates, formates and acetates. The calcium salts and magnesium salts may be used as a mixture thereof. The concentration of the aqueous solution of said salts to be added is not specifically limited but it may be from 2 to 20 % by weight or so. Preferably the active silicic acid-containing aqueous colloidal liquid may contain polyvalent metal components other than the said calcium and magnesium components, to form a sol. As examples of the polyvalent metals other than calcium and magnesium, there may be mentioned II-valent, III-valent and IV-valent metals such as Sr, Ba, Zn, Sn, Al, Pb, Cu, Fe, Ni, Co, Mn, Cr, Y, Ti and Zr. The amount of the polyvalent metal components (other than Ca and Mg components) to be added to the colloidal liquid is preferably from 10 to 80 % by weight with regard to CaO and/or MgO, as their polyvalent metal oxides, when the amount of the calcium salt and/or the magnesium salt added to step (a) is expressed in terms of the corresponding amount of CaO and/or MgO.

When the above-mentioned polyvalent metal components still remain in the active silicic acid-containing aqueous colloidal liquid obtained by cationic exchange treatment of the aforesaid diluted aqueous solution of water glass, the polyvalent metal components are to be calculated into oxide and reckoned in the amount of from 10 to 80 % by weight. The polyvalent metal components of the remainder are preferably added to the active silicic acid-containing aqueous colloidal liquid together with the calcium salt and/or magnesium salt, in the form of water-soluble salts of the said polyvalent metals. As preferred examples of such polyvalent metal salts, there are mentioned inorganic acid salts and organic acid salts such as chlorides, nitrates, sulfates, sulfamates, formates and acetates. In addition, salts of zincates, stannates, aluminates and plumbates, and salts such as sodium aluminate or sodium stannate, may also be used.

The above-mentioned calcium salt, magnesium salt and polyvalent metal salts to be added are preferably uniformly mixed with the active silicic acid-containing aqueous colloidal liquid, and in general, the salts are added in the form of an aqueous solution itself.

In step (b), an alkali metal hydroxide or a water-soluble organic base or a water-soluble silicate of the alkali metal hydroxide or organic base is added to the aqueous solution obtained in the above-mentioned step (a). The addition is preferably effected as soon as possible immediately after the completion of the above-mentioned step (a), with stirring. Although not specifically limited, the temperature may be 2 to 50 °C or so and the time may be 5 to 30 minutes or so in the mixing procedure. It is preferred that the alkali metal hydroxide or water-soluble organic base or water-soluble silicate of the alkali metal hydroxide or organic base is uniformly mixed with the aqueous solution obtained in step (a) and the former is added to the latter directly or in the form of an aqueous solution thereof. Usable alkali metal hydroxides include, for example, sodium, potassium and lithium hydroxides. Usable organic bases include, for example, quaternary ammonium hydroxides such as tetraethanolammonium hydroxide, monomethyltriethanolammonium hydroxide and tetramethylammonium hydroxide, amines such as monoethanolamine, diethanolamine, triethanolamine, N,N-dimethylethanolamine, N-(β-aminomethyl) ethanolamine, N-methylethanolamine, monopropanolamine and morpholine, as well as other basic nitrogen-containing organic compounds. As the water-soluble silicates of the compounds, there may be mentioned, for example, sodium silicate, potassium silicate, silicates of the quaternary ammoniums and silicates of the amines. In addition, aluminates, stannates, zincates and plumbates of alkali metals or organic bases may also be used. These alkali metal hydroxides, organic bases, silicates and metal acid salts may be used as a mixture thereof.

When the alkali metal atom of the alkali metal hydroxide or the molecule of the organic base is represented by "M", the amount of the alkali metal hydroxide or the organic base or the water-soluble silicate of the alkali metal hydroxide or organic base to be added is from 20 to 200 moles, preferably from 60 to 100 moles, of SiO₂ to one mole of M₂O of the total silica content derived from the active silicic acid used in step (a) and the silica content of the above-mentioned silicate. After the addition, the resulting liquid comes to have a pH value of from 7 to 10 or so.

In step (c), the mixture obtained in the above-mentioned step (b) is heated. The heating is effected at a temperature of 60 to 250 °C. Specifically, when the active silicic acid-containing aqueous colloidal liquid to be used in step (a) has a pH value of from 2 to 4, the heating temperature is suitably within the range of from 60 to 150 °C; and when the active silicic acid-containing aqueous colloidal liquid to be used in step (a) has a pH value higher than 4 and up to 5, the heating temperature may be higher and is allowed to be up to 250 °C. The heating time is required to be from 0.5 to 40 hours or so. The heating is preferably conducted with stirring the above-mentioned mixture and possibly without evaporating water.

After being thus heated in step (c), elongated-shaped colloidal silica particles, which are elongated in only one plane with an almost uniform thickness along the elongation of from 5 to 20 nm and which have a particle size of from 40 to 300 nm as measured by dynamic light-scattering method, are formed in the liquid. Accordingly, although the liquid obtained is a sol, it has an SiO₂ concentration of generally from 1 to 6 % by weight or so and contains a large amount of anions. The sol is generally further concentrated. However, it is preferable to remove from the sol obtained in step (c) any excess amount of the anions which would interfere with the stabilization or purification of the sol when concentrated to a SiO₂ concentration of from 10 to 30 % by weight. In removing the anions, it is preferred that a part of water in the sol is also removed together with the anions. After a part of water is thus removed from the sol, the SiO₂ concentration in the sol is elevated. Accordingly, the amount of the water to be removed by the step is preferably so adjusted as to be able to give a sol having an SiO₂ concentration of 30 % by weight or less. For removing both water and anions from the sol obtained in step (c), a method of using a conventional microporous membrane, for example, an ultrafiltrating membrane, for removing them is preferred. Alternatively, for removing the anions, there is also mentioned an ionic exchange method using an ion-exchanging resin. After the amount of the anions which would interfere with the above-mentioned stabilization has been removed, the sol may be also be concentrated by evaporation. An alkali may optionally be added to the sol obtained in step (c) or the concentrated sol so as to adjust the pH value of the sol.

The above-mentioned sol, from which anions and water have been removed, has an SiO₂ concentration of from 10 to 30 % by weight, a viscosity of from several cp to 500 cp or so at room temperature and a pH value of from 8.5 to 11. Although the sol still contains anions in an amount of 1000 ppm or less, generally from 200 to 800 ppm or so, it is extremely stable. The sol contains alkali metal ions and/or organic bases in an amount of molar ratio of SiO₂/M₂O (where M has the same meaning as defined above) from 20 to 200 and additionally contains calcium or magnesium and optionally the above-mentioned polyvalent metals in an amount of from 1500 to 15000 ppm or so of their oxides to SiO₂. The colloidal silica particles in the sol may still have the shape and the size of those already formed by the above-mentioned step (c) and they contain CaO or MaO and optionally polyvalent metal oxides as existing in the sol. Chemical analysis of the sol can easily be effected by a conventional method. The particle size of the colloidal silica particles may be easily measured by the dynamic light-scattering method, BET method and electromicroscopic method with a commercial apparatus.

The sol obtained by the method of the present invention as mentioned above is finally and irreversibly converted into a gel by removal of water therefrom. Although the sol is an alkaline aqueous sol, it may be converted into an acidic aqueous silica sol by cationic exchange treatment thereof. When a different alkali is added to the resulting acidic sol, another alkaline aqueous silica sol which is different from the above-mentioned alkaline aqueous sol can be obtained. The acidic aqueous silica sol is preferred to have a pH value of from 2 to 4. From the acidic aqueous silica sol can be obtained an aqueous sol comprising positively charged colloidal silica particles by a conventional method. Further, an organosol can be obtained from the said aqueous sol, by substituting for the water of the medium thereof an organic solvent by a conventional method, for example, a distillation substitution method. All of said acidic aqueous silica sol, positively charged aqueous silica sol and organo silica sol, still have the shape of those already formed in step (c), and these sols are finally and irreversibly converted into gels by removal of the medium therefrom.

Each of the alkaline aqueous silica sol, acidic aqueous silica sol and positively charged silica sol as prepared in accordance with the present invention can be mixed with any other conventional sol(s) thereby to obtain a stabilized sol. Regarding the organosol of the present invention, it may also be mixed with any other conventional sol(s) to obtain a stabilized sol, provided that the solvents in the sols to be mixed are compatible with each other so as not to cause coagulation of the colloidal silica in the mixed sol.

The sol of the present invention can also be obtained by a different method. In accordance with this second method, colloidal silica particles having a thickness of from 5 to 40 nm and a particle size of from 40 to 500 nm as measured by dynamic light-scattering method are formed. The second method comprises the above-mentioned steps (a'), (b') and (c'), which is advantageous for preparation of particles having a larger thickness.

The acidic aqueous silica sol to be used in step (a'), which has an average particle diameter of from 3 to 30 nm, an SiO₂ content of from 0.5 to 25 % by weight and a pH value of from 1 to 5, may be any acidic aqueous silica sol which is prepared by any conventional method, for example, by the methods described in U.S. Patents No. 2,680,721 and No. 2,900,348. The shape of the colloidal silica particles in the sol may be either spherical or non-spherical, provided that the ratio D₁/D₂ of the particle size (D₁) measured by dynamic light-scattering method to the particle size (D₂) as calculated from the specific surface area measured by BET method is less than 5. However, in order that the particles to be formed may have a uniform thickness along the elongation thereof, a sol should preferably be used which contains spherical colloidal silica particles.

The same operations as those for the above-mentioned steps (a), (b) and (c) may be applied to steps (a'), (b') and (c') of the second method. However, in step (a'), the amount of CaO or MgO or both of them to be added may be elevated up to 1.00 % by weight to SiO₂ of the colloidal silica; in step (b'), the amount of the alkali metal hydroxide or water-soluble organic base or water-soluble silicate thereof may be reduced to 300 as the molar ratio of SiO₂/M₂O; and in step (c'), the heating temperature may be elevated up to 300 °C.

The sol obtained via steps (a'), (b') and (c') can be concentrated in the same manner as mentioned above to give a stable alkaline aqueous silica sol having an anion concentration of 0.1 % by weight or less and an SiO₂ concentration of from 1 to 40 % by weight. In addition, an acidic sol, a positively charged silica sol, an organosol and a mixed sol may also be prepared from the said sol by the same processes as mentioned above.

The characteristic shape of the colloidal silica particles in the sol of the present invention, which has elongation in only one plane and a uniform thickness of from 5 to 40 nm along the elongation with a degree of elongation of from 5 to 30 in terms of the ratio of D₁/D₂ and has a particle size D₁ of from 40 to 500 nm as measured by dynamic light-scattering method, is caused by the particular methods of the present invention as explained in detail in the above. Although it is difficult to completely clarify the mechanism of forming the colloidal silica particles, the following could be presumed.

First, in step (a), when an aqueous calcium or magnesium salt or a mixture of aqueous calcium and magnesium salt is added to the active silicic acid colloid-containing aqueous liquid, the calcium ions and/or the magnesium ions are captured by the active silicic acid particles. Next, in step (b), when an alkali metal hydroxide or an organic base or a silicate of the alkali metal hydroxide or organic base is added to the resulting aqueous solution formed in step (a), a part of the active silicic acid particles, which have captured the calcium ions and/or magnesium ions therewith, would be chain-like coagulated in typing in a row thereby forming string-like elongated particles which might be angled in any direction. In the string-like coagulated particles, the elongation may not be in only one plane or there may partially be a three-dimensional network structure. Next, after being heated in step (c), the active silicic acid particles are polymerized and the above-mentioned long string-like coagulated particles are cleaved, whereupon the three-dimensional structure would be broken into fragments of a certain length, probably from 10 to 100 nm or so, and the already captured calcium ions and/or magnesium ions would thereby react on the thus broken fragments and also on the coagulated particles having a short length so that the elongation of fragments and the short string-like coagulated particles would be settled so as to exist only in one plane. The continuous heating in step (c) causes precipitation of the silicic acid dissolved in the liquid or the silicic acid dissolved from the easily soluble parts of the broken fragments onto the surface of the said fragments one by one, whereby the thickness of the fragments may be enlarged. As a result of the sequence of the process, colloidal silica particles which have an almost uniform thickness of from 5 to 20 nm along the elongation and have been extended in only one plane with a length of from 15 to 200 nm or so are formed in the colloidal liquid.

Also in the above-mentioned second method comprising steps (a'), (b') and (c'), it is believed that the colloidal silica particles having a particle size of from 3 to 30 nm would function in the same manner as mentioned above, in place of the fine particles of the active silicic acid.

When the alkali metal hydroxide or organic base or water-soluble silicate of the alkali metal hydroxide or organic base to be used in step (b) is first added to the active silicic acid-containing aqueous colloid liquid to be used in step (a) and then an aqueous solution of the calcium salt or magnesium salt or a mixture of the calcium salt and magnesium salt to be used in step (a) is thereafter added to the resulting mixture, rapid gelation occurs so that the resulting mixture can hardly be dispersed by a conventional stirring means. Further, even if the thus formed gel is heated, the colloidal silica particles having the above-mentioned shape of the present invention can no longer be obtained.

In step (a), when the SiO₂ concentration of the active silicic acid-containing aqueous colloidal liquid to be used is less than 1 % by weight, removal of a large amount of water is required in concentration of the sol formed, which is inefficient. On the other hand, when the SiO₂ concentration of the active silicic acid-containing aqueous colloid liquid is more than 6 % by weight, the liquid lacks its extreme stability so that a sol having a determined quality can hardly be produced. Accordingly, the SiO₂ concentration is preferably within the range of from 1 to 6 % by weight. Among the active silicic acid-containing aqueous colloidal liquids having such SiO₂ concentration, those having a pH value of from 2 to 5 are further preferred. When the pH value is higher than 5, the stability of the active silicic acid-containing aqueous liquid is insufficient, and the colloidal silica particles in the sol obtained by step (c) can not have the above-mentioned elongated shape. The pH value may be lower than 2, if desired, but such lower pH value is unfavorable since not only addition of any acids is required but also the amount of the unnecessary anions increases in the products.

In step (a), when a calcium salt or magnesium salt or a mixture of calcium salt and magnesium salt is added to the active silicic acid-containing aqueous colloidal liquid in the form of an aqueous solution of the salt, uniform mixing of the resulting mixture may easily be attained. The uniform mixing is important for facilitating the uniform capture of the added calcium ion and/or magnesium ion by the silicic acid.

Of the active silicic acid-containing aqueous colloidal liquids to be used in step (a), one obtainable by cationic exchange treatment of an aqueous solution of a water-soluble silicate contains almost no dissolved or free cation in the liquid. Of the water-soluble silicate to be used, an inexpensive and easily available water glass is preferred. A water-soluble silicate obtainable by dissolving a silica obtained by hydrolysis of a silicon halide or alkoxysilane in an alkali has a low content of impurities, especially polyvalent metals, but it is expensive. As opposed to this, a water glass as a general industrial product contains polyvalent metals generally in an amount of several thousands ppm or less as the oxides thereof to the silica content therein. When an aqueous solution of such water glass is subjected to cationic exchange treatment, all the said polyvalent metal content can not be removed. Accordingly, the resulting active silicic acid-containing aqueous colloidal liquid generally contains the remaining polyvalent metal oxides in an amount of about 5000 ppm or less. But since the oxides are captured by the active silicic acid in the liquid or by the fine polymer particles through chemical bond with silica or adsorption thereto, the liquid contains neither dissolved cations nor free cations therein. The remaining polyvalent metal components are reckoned in the polyvalent metal components to be used together with the calcium salt and/or magnesium salt in step (a) as a part thereof, and therefore these act in the same manner as the polyvalent metal salts to be used together with the calcium salt and/or magnesium salt in step (a).

When the amount of the calcium salt or magnesium salt or a mixture of calcium salt and magnesium salt to be added in step (a) is less than 1500 ppm by weight as CaO or MgO or both of them to SiO₂ of the active silicic acid, the shape of the finally obtainable colloidal silica particles is spherical or cocoon-like. On the other hand, when it is more than 8500 ppm, the colloidal silica particles having the particular shape of the invention can not be formed by step (c). Accordingly, it is believed that the CaO, MgO or both of them in amount of from 1500 to 8500 ppm substantially effects the formation of the particles of the present invention. Some of the above-mentioned polyvalent metal components to be used together with the calcium salt and/or magnesium salt have a function of accelerating the formation of the colloidal silica particles or some others of them have a function of retarding the formation of the particles. When the amount of such additional polyvalent metal components to be used is more than about 80 % by weight of the oxides thereof to CaO and/or MgO, the active silicic acid-containing aqueous colloidal liquid will thereby be gelled.

After addition and mixing of the calcium salt and/or magnesium salt and optionally other metal salts in the above-mentioned step (a), the alkali metal hydroxide or organic base or silicate of the alkali metal hydroxide or organic base is immediately added to the resulting liquid as soon as possible in step (b) so that the active silicic acid particles in the liquid may not vary unfavorably. The addition of such alkaline substances is also effected directly or as an aqueous solution of the substance having a concentration of from 5 to 30 % or so by weight, preferably with stirring, so as to facilitate the uniform mixing of the resulting liquid.

In step (b), when the amount of the alkaline substances to be added is less than 20 as a molar ratio of the said SiO₂/M₂O, the particles can not grow by heating in the subsequent step (c). On the contrary, when the molar ratio is more than 200, the particles can not also grow by heating in step (c) but the sol will be gelled by such heating. Accordingly, addition of the said alkaline substances in an amount of from 20 to 200, preferably from 60 to 100, as the molar ratio of SiO₂/M₂O, followed by heating of the resulting mixture in the subsequent step (c) gives the intended colloidal silica particles having the size and the shape as specifically defined in the present invention. Addition of the alkaline substances in step (b) is desired to be effected at a possibly lower temperature, preferably at room temperature, so that the stirring of the resulting mixture may easily be conducted.

When the heating temperature in step (c) is lower than 60 °C, the intended colloidal silica particles of the present invention cannot be formed, and therefore it is required to be 60 °C or higher. However, when the active silicic acid-containing aqueous colloidal liquid to be used in step (a) has a pH value of from 2 to 4 , a higher heating temperature exceeding 150 °C will cause formation of gels. On the other hand, when the active silicic acid-containing aqueous colloidal liquid to be used in step (a) is more than 4 and up to 5 in pH, the heating temperature in step (c) may be higher than 150 °C. However, a temperature higher than 250 °C will also cause gelation. The heating time may be shorter for a higher temperature than 60 °C for forming particles of a determined size. As opposed to this, when the heating temperature is lower, a longer heating time will be required. Accordingly, in step (c), the heating is preferably effected at 60 to 250 °C for 0.5 to 40 hours. After completion of step (c), the sol obtained is cooled. The sol may optionally be diluted with water, if desired.

Stability is an indispensable property for the sol as an industrial product, and the sol is generally desired to have an SiO₂ concentration of from 10 to 30 % by weight. In order to obtain a stable alkaline sol having the SiO₂ concentration to fall within the said range, the concentration of anions which may exist in the sol is generally 1000 ppm or less. As calcium, magnesium and other polyvalent metal ions are captured in the colloidal silica particles in the sol of the present invention, no metal ions exist in the aqueous medium of the sol in such an amount that would interfere with the stability of the sol. In order to obtain the stable alkaline aqueous sol having the SiO₂ concentration of from 10 to 30 % by weight, alkaline cations are required to be contained in the sol in an amount of from 20 to 200 or so as a molar ratio of SiO₂/M₂O (where M has the same meaning as mentioned above). Because of the existence of such alkaline cations, the sol generally has a pH value of from 8.5 to 11. When a microporous membrane is used for removal of the anions from the sol after step (c), the co-existing cations will also be removed together with the anions so that the alkaline cations to remain in the sol will often be lacking. In such case, the above-mentioned alkali metal hydroxide or organic base may be added to the sol in an amount necessary for stabilizing the same during or after the concentration, whereby a stable sol can be obtained. In accordance with a method of using a microporous membrane, such as an ultrafiltration membrane, the colloidal silica particles in the sol do not pass through the membrane so that the sol can be concentrated simultaneously with removal of both the anions and water therefrom. The thus concentrated sol may optionally be diluted with water, if desired.

In accordance with the second method of the present invention, when the SiO₂ concentration in the acidic sol to be used in step (a') is less than 0.5 % by weight, a large amount of water is required to be removed from the sol in the concentration step after step (c') and such is inefficient. When, on the other hand, the SiO₂ concentration is higher than 25 % by weight, the amount of the calcium salt or magnesium salt to be added to the sol will be large, and the sol to which such a large amount of the salt has been added is unfavorable as it easily gels. When the acidic sol to be used in step (a') has a pH value overstepping the range of from 1 to 5, the stability of the sol will be poor and the colloidal silica particles in the sol obtained by step (c') can not have the above-mentioned elongated shape. In addition, when the particle size of the acidic sol to be used in step (a') is more than 30 nm, the colloidal silica particles in the sol obtained by step (c') can not also have the elongated shape. Although employable, an acidic silica sol having a particle size less than 3 nm is not generally used in step (a'), since such is far better to be processed in the first step of the present invention comprising the steps (a), (b) and (c). The amount of the calcium salt or magnesium salt to be added to step (a') may be larger than that to be added to step (a). However, when the said amount is more than 1.00 % by weight to the SiO₂ content, the intended colloidal silica particles having the aforesaid elongated shape of the present invention can not also be obtained by step (c'). The amount of the alkaline substances to be added in step (b') may be smaller than that to be added in the step (b). However, when the said amount is more than 300 as the molar ratio of SiO₂/M₂O, the sol will also be gelled in step (c'). The heating temperature in step (c') may be fairly higher than that in the step (c). However, when the temperature is higher than 300 °C, the sol will also be gelled during the heating. In addition, the efficiency of the process can not be so elevated even under such elevated heating temperature. Regarding the heating time in step (c'), it may be shorter when the heating temperature is higher for forming particles with a determined diameter. For instance, when the heating temperature is 60 to 300 °C, the heating time may be 0.5 to 40 hours so as to efficiently form the intended colloidal silica particles having the above-mentioned particular elongated shape.

When the silica sol prepared by the second method of the present invention comprising the steps (a'), (b') and (c') has a high SiO₂ concentration and also has a high anion content of 1000 ppm or more, the stability of the sol will also lower. In the alkaline aqueous sol, presence of alkaline cations in an amount of from 20 to 300 as the molar ratio of SiO₂/M₂O is required for stabilization thereof. In particular, when the silica sol is concentrated, the anion content and the cation content in the sol are important to be kept within the above-mentioned ranges which are necessary for stabilizing the concentrated sol. Concentration of the sol may be effected in the same manner as that to be effected after steps (a), (b) and (c), provided that the stability of the sol may be maintained as mentioned above.

The following examples are intended to illustrate the present invention in more detail but not to limit it in any way.

### EXAMPLE 1

Water was added to a commercial JIS No. 3 sodium water glass (molar ratio of SiO₂/Na₂: 3.22, SiO₂ content: 28.5 % by weight) to prepare an aqueous sodium silicate solution having an SiO₂ concentration of 3.6 % by weight. The aqueous sodium silicate solution was passed through a column filled with a cationic exchange resin (trade name of Amberlite 120B), to obtain an active silicic acid-containing aqueous colloid liquid having an SiO₂ concentration of 3.56 % by weight, a pH value of 2.81 and an electroconductivity of 731 µS/cm. The liquid contained Al₂O₃ and Fe₂O₃ as remained therein in a total amount of 75 ppm.

2000 g of the active silicic acid-containing aqueous colloidal liquid was put in a glass container and then 8.0 g of aqueous 10 wt.% calcium chloride solution was added thereto with stirring at room temperature. After 30 minutes, 12.0 g of aqueous 10 wt.% sodium hydroxide solution was added thereto with stirring at room temperature. The thus obtained mixture had a pH value of 7.6 and a molar ratio of SiO₂/Na₂O of 80.

Next, the mixture was fed into a stainless steel autoclave and heated for 6 hours with stirring at 130 °C and then cooled, and the content was taken out therefrom. The thus formed liquid was a silica sol, which contained SiO₂ in an amount of 3.52 % by weight and had a molar ratio of SiO₂/Na₂O (by titrimetric method) of 101 and a pH value of 9.64. In the sol, the CaO content by weight to SiO₂ was 5400 ppm, and no free calcium ion was detected therein.

Next, the silica sol was concentrated in an ultrafiltration apparatus to give a concentrated silica sol having an SiO₂ concentration of 21 % by weight. As a result of analysis, the concentrated sol was found not to contain any dissolved or free calcium ion, and it had a specific gravity of 1.136, a pH value of 9.24, a viscosity of 125 mPa.s (cp) (at 20 °C), a molar ratio (by titrimetric method) of SiO₂/Na₂O of 126, a CaO content of 0.113 % by weight, a chloride ion content of 0.019 % by weight, a sulfate ion content of 0.0020 % by weight and an electroconductivity of 2080 µS/cm. From the electromicroscopic photograph, the colloidal silica particles in the sol were found to be elongated particles having a thickness of 12 nm. The particle size of the colloidal silica particles in the sol was 84.6 nm, as measured by dynamic light-scattering method. The colloidal silica particle size was calculated to be 12 nm by BET method. Fig. 1 shows a 200,000 magnification photograph of the colloidal silica particles of the sol, as taken with an electronic microscope.

The concentrated sol was stored in a closed vessel at 60 °C, resulting in no deterioration even after one month.

The sol was coated on a glass plate and dried, which formed a better film than that formed from a conventional sol. When brought into contact with water, the film did not dissolve in water.

### EXAMPLE 2

2000 g of the active silicic acid-containing aqueous colloidal liquid (SiO₂: 3.56 %, pH: 2.81) as prepared in Example 1 was put in a glass container, and 8.0 g of aqueous 10 wt.% calcium chloride solution was added thereto with stirring. Next, 12.0 g of aqueous 10 wt.% sodium hydroxide solution was further added thereto also with stirring, to give a mixture having a molar ratio of SiO₂/Na₂O of 80 and a pH value of 7.62.

The mixture was fed into a 2.5 liter stainless steel autoclave and heated at 130 °C for 24 hours. The thus obtained silica sol contained SiO₂ in an amount of 3.52 % by weight and had a molar ratio of SiO₂/Na₂O (as measured by titrimeteric method) of 101. It contained CaO in an amount of 5400 ppm by weight to SiO₂. It had a pH value of 9.81.

The sol was concentrated in an ultrafiltration apparatus to a silica concentration of 15.2 % by weight. The resulting sol had a specific gravity of 1.092, a pH value of 9.36, a viscosity of 225 mPa.s (cp), a molar ratio of SiO₂/Na₂O (by titrimetric method) of 185, a CaO content of 820 ppm, a Cl content of 223 ppm, an SO₄ content of 24 ppm, an electroconductivity of 1620 µS/cm, a particle size (by BET method) of 14.5 nm and a particle size (by dynamic light-scattering method) of 167 nm. The sol was stable for one month at 60 °C.

### EXAMPLE 3

2000 g of the active silicic acid-containing aqueous colloidal liquid (SiO₂: 3.56 %, pH: 2.81) obtained in Example 1 was put in a glass container, and 8.0 g of aqueous 10 wt.% calcium chloride solution was added thereto with stirring. Next, 13.5 g of aqueous 10 wt.% sodium hydroxide solution was added thereto also with stirring, to give a mixture having a molar ratio of SiO₂/Na₂O of 70 and a pH value of 7.84.

The mixture was fed into a 2.5 liter stainless steel autoclave and heated at 100 °C for 6 hours. The thus formed silica sol contained SiO₂ in an amount of 3.52 % by weight and had a molar ratio of SiO₂/Na₂O (measured by titrimetric method) of 88.0. It contained CaO in an amount of 5400 ppm to SiO₂. It had a pH value of 9.55.

The sol was concentrated in an ultrafiltration apparatus to the silica concentration of 20.6 % by weight. The resulting sol had a specific gravity of 1.133, a pH value of 9.21, a viscosity of 45 mPa.s (cp), a molar ratio of SiO₂/Na₂O (measured by titrimetric method) of 100, a CaO content of 1110 ppm, a Cl content of 265 ppm, an SO₄ content of 35 ppm, an electroconductivity of 2970 µS/cm, a particle size (by BET method) of 8.8 nm and a particle size (by dynamic light-scattering method) of 51.8 nm. The sol was stable for one month at 60 °C.

### EXAMPLE 4

The aqueous solution of a commercial sodium water glass as used in Example 1 was subjected to cationic exchange treatment to obtain an active silicic acid-containing aqueous colloidal liquid having an SiO₂ content of 3.66 % by weight and a pH value of 2.82. 2000 g of the active silicic acid-containing aqueous colloidal liquid was put in a glass container, and 1.08 g of HCl-acidic aqueous 9.52 wt.% zinc chloride solution was added thereto with stirring. Next, 12.0 g of aqueous 10 wt.% calcium nitrate was added thereto also with stirring and then 13.7 g of aqueous 10 wt.% sodium hydroxide solution was added with stirring, to give a mixture having a molar ratio of SiO₂/Na₂O of 70 and a pH value of 7.82.

The mixture was fed into a 2.5 liter stainless steel autoclave and heated at 130 °C for 6 hours. The resulting silica sol contained SiO₂ in an amount of 3.61 % by weight and had a molar ratio of SiO₂/Na₂O (by titrimetric method) of 88.0. It contained CaO of 5600 ppm by weight and ZnO of 890 ppm by weight to SiO₂. It had a pH value of 9.72.

The sol was concentrated in an ultrafiltration apparatus to the silica concentration of 21.8 % by weight. The resulting sol had a specific gravity of 1.142, a pH value of 9.37, a viscosity of 79 mPa.s (cp); a molar ratio of SiO₂/Na₂O (by titrimetric method) of 123, a CaO content of 1220 ppm, a ZnO content of 195 ppm, a Cl content of 30 ppm, an NO₃ content of 345 ppm, an SO₄ content of 24 ppm, an electroconductivity of 2400 µS/cm, a particle size (by BET method) of 11.0 nm and a particle size (by dynamic light-scattering method) of 62.6 nm. The sol was stable for one month at 60 °C.

### EXAMPLE 5

The aqueous solution of a commercial sodium water glass as used in Example 1 was subjected to cationic exchange treatment to obtain an active silicic acid-containing aqueous colloidal liquid having an SiO₂ content of 3.74 % by weight and a pH value of 2.85. 2000 g of the active silicic acid-containing aqueous colloidal liquid was put in a glass container and 7.6 g of aqueous 10 wt.% magnesium chloride solution was added thereto with stirring. Next, 17.5 g of aqueous 10 wt.% potassium hydroxide solution was added thereto also with stirring, to give a mixture having a molar ratio of SiO₂/K₂O of 80 and a pH value of 7.39.

The mixture was fed into a 2.5 liter stainless steel autoclave and heated at 120 °C for 6 hours. The resulting silica sol had an SiO₂ content of 3.69 % by weight and a molar ratio of SiO₂/K₂O (by titrimetric method) of 101. It contained MgO in an amount of 4390 ppm by weight to SiO₂. It had a pH value of 8.47.

To 1564 g of the sol was added 4.5 g of aqueous 10 wt.% potassium hydroxide solution with stirring, whereby the sol had a pH value of 9.53.

The sol was then concentrated in an ultrafiltration apparatus to a silica concentration of 16.2 % by weight. The resulting sol had a specific gravity of 1.100, a pH value of 9.20, a viscosity of 69 mPa.s (cp), a molar ratio of SiO₂/K₂O (by titrimetric method) of 143, an MgO content of 710 ppm, a Cl content of 301 ppm, an SO₄ content of 59 ppm, an electroconductivity of 3070 µS/cm, a particle size (by BET method) of 11.1 nm and a particle size (by dynamic light-scattering method) of 85.5 nm. The sol was stable for one month at 60 °C.

### EXAMPLE 6

2000 g of the active silicic acid-containing aqueous colloidal liquid (SiO₂: 3.74 wt.%, pH: 2.85) obtained in Example 5 was put in a glass container and 4.8 g of aqueous 10 wt.% magnesium chloride solution was added thereto with stirring. Next, 2.44 g of monoethanolamine was added thereto also with stirring, to give a mixture having a molar ratio of SiO₂/monoethanolamine of 31 and a pH value of 7.62.

The mixture was fed into a 2.5 liter stainless steel autoclave and heated at 130 °C for 6 hours. The resulting silica sol had an SiO₂ content of 3.73 % by weight, a monoethanolamine content of 0.122 % by weight and a molar ratio of SiO₂/monoethanolamine (by titrimetric method) of 36.5. It contained MgO in an amount of 2820 ppm by weight to SiO₂ and had a pH value of 9.00.

To 1917 g of the sol was added 1.0 g of monoethanolamine with stirring, whereby the sol had a pH value of 9.50.

The sol was then concentrated in an ultrafiltration apparatus to a silica concentration of 14.8 % by weight. The resulting sol had a specific gravity of 1.091, a pH value of 9.19, a viscosity of 33 mPa.s (cp), a monoethanolamine content of 0.362 % by weight, a molar ratio of SiO₂/monoethanolamine (by titrimetric method) of 47, an MgO content of 417 ppm, an electroconductivity of 1670 µS/cm, a particle size (by BET method) of 10.6 nm and a particle size (by dynamic light-scattering method) of 72.5 nm. It was stable for 6 months or more at room temperature.

### EXAMPLE 7

A commercial JIS No. 3 sodium water glass (SiO₂ content: 29.2 wt.%, Na₂O content: 9.47 wt.%, molar ratio of SiO₂/Na₂O: 3.18) was diluted with water to a silica concentration of 2.90 % by weight, and this was passed through a column filled with a cationic exchange resin to give an active silicic acid-containing aqueous colloidal liquid having an SiO₂ concentration of 2.90 % by weight and a pH value of 2.85. The total of the remaining Al₂O₃ and Fe₂O was 26 ppm. 2000 g of the thus prepared liquid was put in a glass container, and 9.0 g of aqueous 10 wt.% calcium nitrate solution was added thereto with stirring. Next, 9.66 g of aqueous 10 wt.% sodium hydroxide solution was added thereto also with stirring, to give a mixture having a molar ratio of SiO₂/Na₂O of 80 and a pH value of 7.56. The mixture was fed into a 2.5 liter stainless steel autoclave and heated at 130 °C for 6 hours. The resulting silica sol had an SiO₂ content of 2.87 % by weight and a molar ratio of SiO₂/Na₂O (by titrimetric method) of 113. It contained CaO in an amount of 5300 ppm by weight to SiO₂ and had a pH value of 9.67.

The sol was concentrated in an ultrafiltration apparatus to a SiO₂ concentration of 16.0 % by weight. The resulting sol had a specific gravity of 1.098, a pH value of 9.32, a viscosity of 70 mPa.s (cp), an SiO₂ content of 16.0 % by weight, a molar ratio of SiO₂/Na₂O (by titrimetric method) of 108, a CaO content of 850 ppm, a Cl content of 30 ppm, an NO₃ content of 313 ppm, an SO₄ content of 22 ppm, an electroconductivity of 1745 µS/cm, a particle size (by BET method) of 10.9 nm and a particle size (by dynamic light-scattering method) of 69.3 nm. The sol was stable at 60 °C for one month.

### EXAMPLE 8

The silica sol having a silica concentration of 21.0 % by weight, as obtained in Example 1, was diluted with pure water to a silica concentration of 16 % by weight. This was passed through a column filled with a cationic exchange resin to obtain an acidic silica sol having a silica concentration of 15.7 % by weight.

The resulting sol had a specific gravity of 1.092, a pH value of 2.20, a viscosity of 13 mPa.s (cp), an SiO₂ content of 15.7 % by weight, an Na₂O content of 190 ppm, a CaO content of 185 ppm, a Cl content of 144 ppm, an SO₄ content of 16 ppm, an electroconductivity of 3030 µS/cm, a particle size (by BET method) of 12.0 nm and a particle size (by dynamic light-scattering method) of 84.6 nm. The sol was stable at room temperature for 3 months or more.

### EXAMPLE 9

800 g of the acidic silica sol obtained in Example 8 was put in a rotary vacuum condenser, which was conditioned to have a vacuum degree of from 650 to 720 Torr and a liquid temperature of from 20 to 40 °C. 12,020 g of absolute methanol was added thereto over 14 hours while water formed was removed from the reaction system by azeotropic distillation, whereby the water content in the sol was substituted by methanol.

The thus obtained methanol silica sol had a specific gravity of 0.876, a viscosity of 14.5 mPa.s (cp), an SiO₂ content of 14.3 % by weight and an H₂O content of 1.0 % by weight. The sol was stable at room temperature for 3 months or more.

### COMPARATIVE EXAMPLE 1

2000 g of the active silicic acid-containing aqueous colloidal liquid (SiO₂: 3.56 % by weight, pH: 2.81) obtained in Example 1 was put in a glass container, and 12.0 g of aqueous 10 wt.% sodium hydroxide solution was added thereto with stirring. The resulting mixture had a molar ratio of SiO₂/Na₂O of 80 and a pH value of 7.8.

The mixture was fed into a 2.5 liter stainless steel autoclave and heated at 130 °C for 6 hours. The resulting sol had an SiO₂ content of 3.54 % by weight, a molar ratio of SiO₂/Na₂O (by titrimetric method) of 107 and a pH value of 10.07. The sol was concentrated in an ultrafiltration apparatus to a SiO₂ concentration of 21.9 % by weight. The resulting sol had a specific gravity of 1.144, a pH value of 9.69, a viscosity of 4.3 mPa.s (cp), an SiO₂ content of 21.9 % by weight, a molar ratio of SiO₂/Na₂O (by titrimetric method) of 126, an electroconductivity of 2140 µS/cm, a particle size (by BET method) of 11.0 nm and a particle size (by dynamic light-scattering method) of 26.8 nm. Fig. 2 shows a photograph of the sol taken with an electronic microscope, which indicates that the shape of the colloidal silica particles in the sol is spherical.

### COMPARATIVE EXAMPLE 2

Water was added to the sodium water glass as mentioned in Example 1 so that the water glass was diluted to a concentration of 5.0 % by weight. 1500 g of the resulting aqueous solution was put in a glass container and 380 g of aqueous 10 wt.% sulfuric acid solution was added thereto with stirring, whereby the pH value of the resulting mixture became 4.54.

The wet gel of the thus formed silica was taken out by filtration, and 4000 g of pure water was poured thereto and washed. The resulting wet gel was dispersed in pure water to obtain 1800 g of a dispersion having an SiO₂ concentration of 4.0 % by weight. To this was added 12.0 g of aqueous 10 wt.% sodium hydroxide solution. The resulting mixture had a molar ratio of SiO₂/Na₂O of 80 and a pH value of 9.0.

The thus formed dispersion was fed into a 2.5 liter stainless steel autoclave and heated at 130 °C for 6 hours. The resulting sol had an SiO₂ content of 3.97 % by weight, a molar ratio of SiO₂/Na₂O (by titrimetric method) of 87 and a pH value of 10.46.

The sol was concentrated in an ultrafiltration apparatus to the silica concentration of 21.2 % by weight. The resulting sol had a specific gravity of 1.138, a pH value of 9.98, a viscosity of 40 mPa.s (cp), an SiO₂ content of 21.2 % by weight, a molar ratio of SiO₂/Na₂O (by titrimetric method) of 98, an electroconductivity of 2520 µS/cm, a particle size (by BET method) of 9.9 nm and a particle size (by dynamic light-scattering method) of 91.2 nm. Fig. 3 shows a photograph of the sol taken with an electronic microscope, which indicates that the colloidal silica particles in the sol are non-spherical but do not have an elongated shape.

### COMPARATIVE EXAMPLE 3

2000 g of the active silicic acid-containing aqueous colloidal liquid (SiO₂: 3.56 % by weight, pH: 2.81) obtained in Example 1 was put in a glass container, and 8.0 g of aqueous 10 wt.% calcium chloride solution was added thereto with stirring. Next, 12.0 g of aqueous 10 wt.% sodium hydroxide solution was added thereto also with stirring, to give a mixture having a molar ratio of SiO₂/Na₂O of 80. It had a pH value of 7.62 and had a CaO content of 5400 ppm by weight to SiO₂.

The mixture was fed into a 2.5 liter stainless steel autoclave and then heated at 160 °C for 6 hours. As a result, a gel substance was formed in the container, which was no more fluid.

### COMPARATIVE EXAMPLE 4

2000 g of the active silicic acid-containing aqueous colloidal liquid (SiO₂: 3.56 % by weight, pH: 2.81) obtained in Example 1 was put in a glass container, and 8.0 g of aqueous 10 wt.% calcium chloride solution was added thereto with stirring. Next, 3.8 g of aqueous 10 wt.% sodium hydroxide solution was added thereto also with stirring, to give a mixture having a molar ratio of SiO₂/Na₂O of 250. It had a pH value of 6.54 and had a CaO content of 5400 ppm by weight to SiO₂.

The mixture was fed into a 2.5 liter stainless steel autoclave and then heated at 130 °C for 6 hours. As a result, a gel substance was formed in the container, which was no more fluid.

### COMPARATIVE EXAMPLE 5

2000 g of the active silicic acid-containing aqueous colloidal liquid (SiO₂: 3.56 % by weight, pH: 2.81) obtained in Example 1 was put in a glass container, and 16.0 g of aqueous 10 wt.% calcium chloride solution was added thereto with stirring. Next, 12.0 g of aqueous 10 wt.% sodium hydroxide solution was added thereto also with stirring, to give a mixture having a molar ratio of SiO₂/Na₂O of 80 and a pH value of 7.48. It contained CaO in an amount of 10800 ppm by weight to SiO₂.

In preparation of the mixture, the viscosity of the mixture began to increase in 20 minutes after the initiation of the addition of the aqueous sodium hydroxide solution, and the fluidity of the mixture thus lowered. The pasty substance having a lowered fluidity was fed into a 2.5 liter stainless steel autoclave and heated at 130 °C for 6 hours. As a result, a gel substance was formed in the container, which was no more fluid.

### EXAMPLE 10

100 g of the alkaline aqueous silica sol having an SiO₂ concentration of 21 % by weight, as obtained in Example 1, and 100 g of the alkaline aqueous silica sol having a SiO₂ concentration of 21.9 % by weight, as obtained in Comparative Example 1, were mixed, and the resulting mixture was stored in a sealed container at room temperature. It was stable for 6 months or more.

### EXAMPLE 11

Pure water was added to a commercial JIS No. 3 sodium water glass (molar ratio of SiO₂/Na₂O: 3.22, SiO₂ content: 28.5 % by weight) to obtain an aqueous sodium silicate solution having an SiO₂ concentration of 3.3 % by weight. The aqueous sodium silicate solution was passed through a column filled with a cationic exchange resin (trade name of Amberlite 120B), to obtain an active silicic acid-containing aqueous colloid liquid having an SiO₂ concentration of 3.2 % by weight, a pH value of 2.91 and an electroconductivity of 667 µS/cm. The liquid contained Al₂O₃ and Fe₂O₃ as retained therein in a total amount of 67 ppm. 2000 g of the said active silicic acid-containing aqueous colloidal liquid was put in a glass container and then 1.1 g of aqueous 10 wt.% sodium hydroxide solution was added thereto with stirring at room temperature, and stirring was thereafter continued for 10 minutes. The active silicic acid-containing aqueous colloidal liquid had a pH value of 4.15. Next, 12.1 g of aqueous 10 wt.% calcium nitrate was added thereto with stirring at room temperature, and after 10 minutes, 13.1 g of aqueous 10 wt.% sodium hydroxide solution was added thereto also with stirring at room temperature. The thus obtained mixture had an SiO₂ content of 3.18 % by weight, a pH value of 8.08, a molar ratio of SiO₂/Na₂O of 60 and a CaO content of 206 ppm. The mixture was fed into a 2.5 liter stainless steel autoclave and heated at 130 °C for 6 hours. The resulting silica sol was proved, by electromicroscopic observation, to contain colloidal silica particles having an elongated shape. The particles had a thickness of about 10 nm and a length of from 60 to 200 nm. They had a particle size of 74.9 nm as measured by dynamic light-scattering method. They also had a particle size of 12.6 nm as calculated out by BET method. The sol contained an SiO₂ content of 3.18 % by weight and had a molar ratio of SiO₂/Na₂O (by titrimetric method) of 93 and a pH value of 9.90. It contained no gel. Next, the thus prepared thin silica sol liquid containing colloidal silica particles with an elongated shape was concentrated by passing through an ultrafiltration apparatus at room temperature to give a concentrated silica sol having an SiO₂ concentration of 20.5 % by weight. The resulting sol had a specific gravity of 1.132, a pH value of 9.59, a viscosity of 46.5 mPa.s (cp), a molar ratio of SiO₂/Na₂O (by titrimetric method) of 107, a CaO content of 0.13 % by weight, a Cl content of 58 ppm, an SO₄ content of 39 ppm, an NO₃ content of 489 ppm and an electroconductivity of 2610 µS/cm. After concentration, there was no change in the shape of the particles in the concentrated silica sol. The thus concentrated silica sol was stored in a sealed container at 60 °C, which was found stable after one month. The sol was coated on a glass plate and dried, which formed a better film than that formed from a conventional sol.

### EXAMPLE 12

2000 g of the same active silicic acid-containing aqueous colloidal liquid as that used in Example 11 (SiO₂: 3.2 % by weight, pH: 2.91; electroconductivity: 667 µS/cm) was put in a glass container, and 1.2 g of aqueous 10 wt.% sodium hydroxide was added thereto with stirring at room temperature, and thereafter stirring was continued for 10 mintues. The resulting active silicic acid-containing aqeuous colloidal liquid had a pH value of 4.30. Next, 11.7 g of aqueous 10 wt.% calcium nitrate solution was added thereto with stirring at room temperature, and after 10 minutes, 13.0 g of aqueous 10 wt.% sodium hydroxide solution was further added thereto also with stirring at room temperature. The thus obtained mixture had an SiO₂ content of 3.18 % by weight, a pH value of 8.14, a molar ratio of SiO₂/Na₂O of 60 and a CaO content of 200 ppm. The mixture was fed into a 2.5 liter stainless steel autoclave and heat-treated at 170 °C for one hour. The resulting silica sol was proved, by electromicroscopic observation, to contain colloidal silica particles having an elongated shape. The particles had a thickness of about 12 nm and a length of from 60 to 300 nm. They had a particle diameter of 117 nm as measured by dynamic light-scattering method. They also had a particle diameter of 14 nm as calculated out by BET method. The sol contained an SiO₂ content of 3.18 % by weight and had a molar ratio of SiO₂/Na₂O (by titrimetric method) of 103 and a pH value of 10.31. It contained no gel. Next, the thus prepared thin silica sol liquid containing colloidal silica particles with an elongated shape was concentrated by passing through an ultrafiltration apparatus at room temperature to give a concentrated silica sol having an SiO₂ concentration of 10.0 % by weight. The resulting sol had a specific gravity of 1.061, a pH value of 10.06, a viscosity of 25 mPa.s (cp), a molar ratio of SiO₂/Na₂O (by titrimetric method) of 109, a CaO content of 0.07 % by weight, a Cl content of 30 ppm, an SO₄ content of 19 ppm, an NO₃ content of 260 ppm and an electroconductivity of 1420 µS/cm. After concentration, there was no change in the shape of the particles in the concentrated silica sol. The thus concentrated silica sol was stored in a sealed container at 60 °C, which was found stable after one month. The sol was coated on a glass plate and dried, which formed a better film than that formed from a conventional sol.

### EXAMPLE 13

Pure water was added to the same active silicic acid-containing aqueous colloidal liquid as that used in Example 11 (SiO₂: 3.2 % by weight, pH: 2.91, electroconductivity: 667 µS/cm) to prepare a diluted active silicic acid-containing liquid having an SiO₂ concentration of 1.6 % by weight, a pH value of 2.90 and an electroconductivity of 670 µS/cm. 2000 g of the diluted active silicic acid-containing liquid was put in a glass container, and 1.0 g of aqueous 10 wt.% sodium hydroxide solution was added thereto with stirring at room temperature, and stirring was continued for 10 minutes. The resulting active silicic acid-containing aqueous colloidal liquid had a pH value of 4.10. Next, 8.8 g of aqueous 10 wt.% calcium nitrate solution was added thereto with stirring at room temperature, and, after 10 minutes, 7.89 g of aqueous 10 wt.% sodium hydroxide solution was further added thereto also with stirring at room temperature. The thus obtained mixture had an SiO₂ content of 1.59 % by weight, a pH value of 7.84, a molar ratio of SiO₂/Na₂O of 60 and a CaO content of 150 ppm. The mixture was fed into a 2.5 liter stainless steel autoclave and heat-treated at 130 °C for 6 hours. The resulting silica sol was proved, by electromicroscopic observation, to contain colloidal silica particles having an elongated shape. The particles had a thickness of about 10 nm and a length of from 60 to 250 nm. They had a particle size of 89.8 nm as measured by dynamic light-scattering method. They also had a particle size of 12.8 nm as calculated out by BET method. The sol contained an SiO₂ content of 1.59 % by weight and had a molar ratio of SiO₂/Na₂O (by titrimetric method) of 95 and a pH value of 9.47. It contained no gel. Next, the thus prepared thin silica sol liquid containing colloidal silica particles with an elongated shape was concentrated by passing through an ultrafiltration apparatus at room temperature to give a concentrated silica sol having an SiO₂ concentration of 10.1 % by weight. The resulting sol had a specific gravity of 1.061, a pH value of 9.16, a viscosity of 32 mPa.s (cp), a molar ratio of SiO₂/Na₂O (by titrimetric method) of 110, a CaO content of 0.08 %, a Cl content of 27 ppm, an NO₃ content of 290 ppm, an SO₄ content of 12 ppm and an electroconductivity of 1200 µS/cm. After concentration, there was no change in the shape of the particles in the concentrated silica sol. The thus concentrated silica sol was stored in a sealed container at 60 °C, which was found stable after one month. The sol coated on a glass plate and dried, which formed a better film than that formed from a conventional sol.

### COMPARATIVE EXAMPLE 6

Pure water was added to the same active silicic acid-containing aqeuous colloidal liquid as that used in Example 11 (SiO₂: 3.2 % by weight, pH: 2.91, electroconductivity: 667 µS/cm) to prepare a diluted active silicic acid-containing liquid having an SiO₂ concentration of 2.0 % by weight, a pH value of 2.90 and an electroconductivity of 820 µS/cm. 2000 g of the diluted active silicic acid-containing liquid was put in a glass container, and 1.0 g of aqueous 10 wt.% sodium hydroxide solution was added thereto with stirring at room temperature, and stirring was continued for 10 minutes. The resulting active silicic acid-containing aqueous colloidal liquid had a pH value of 4.32. Next, 30 g of aqueous 10 wt.% calcium nitrate solution was added thereto with stirring at room temperature, and, after 10 mintues, 7.89 g of aqueous 10 wt.% sodium hydroxide solution was further added thereto also with stirring at room temperature. The thus obtained mixture had an SiO₂ content of 1.98 % by weight, a pH value of 7.42, a molar ratio of SiO₂/Na₂O of 60 and a CaO content of 500 ppm. The mixture was fed into a 2.5 liter stainless steel autoclave and heat-treated at 130 °C for 6 hours. As a result, a gel substance was formed in the container, which was no more fluid.

### EXAMPLE 14

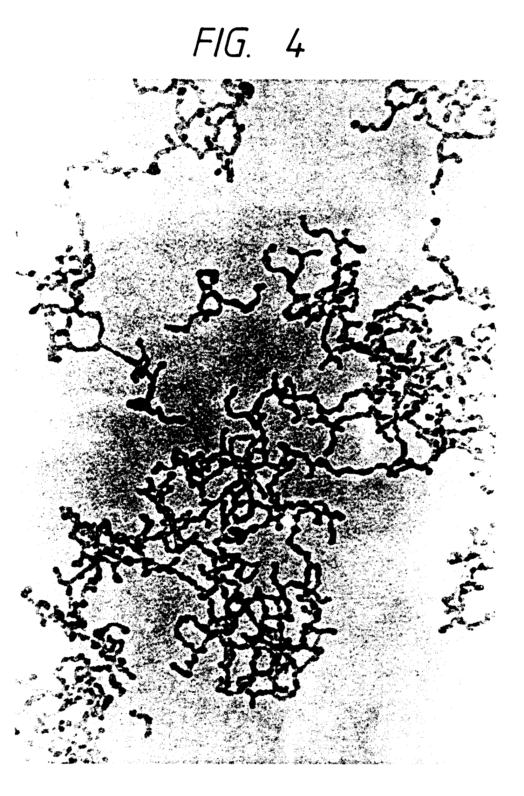

Pure water was added to an acidic silica sol obtained by treating a commercial alkaline aqueous sol (particle size by Seares method: 5 nm SiO₂ concentration: 20 % by weight, specific gravity: 1.129, pH: 9.4, viscosity: 4 mPa.s (cp) with a hydrogen type cationic exchange resin to prepare an acidic silica sol having an SiO₂ concentration of 3.2 % by weight and a pH value of 3.27. 2000 g of the acidic silica sol was put in a 3 liter glass container, and 12.6 g of aqueous 10 wt.% calcium nitrate solution was added thereto with stirring at room temperature, and stirring was continued for 10 minutes. Next, 14.20 g of aqueous 10 wt.% sodium hydroxide solution was further added thereto also with stirring at room temperature, and stirring was continued for 10 minutes. The resulting mixture had an SiO₂ content of 3.16 % by weight, a pH value of 9.3, a molar ratio of SiO₂/Na₂O of 60 and a CaO content of 215 ppm. Next, the mixture was fed into a 2.5 liter stainless steel autoclave and heat-treated at 130 °C for 6 hours. The resulting sol was proved, by electromicroscopic observation, to contain colloidal silica particles having an elongated shape. The particles had a thickness of about 10 nm and a length of from 50 to 300 nm. They had a particle size of 65 nm as measured by dynamic light-scattering method. They also had a particle size of 12.3 nm as calculated out by BET method. Fig. 4 shows a 200,000 magnification photograph of the colloidal silica particles of the sol, as taken with an electronic microscope. The sol had an SiO₂ content of 3.16 % by weight, a molar ratio of SiO₂/Na₂O (by titrimetric method) of 78 and a pH value of 9.6. It contained no gel. Next, the thus prepared thin silica sol liquid containing colloidal silica particles with an elongated shape was concentrated by passing through an ultrafiltration apparatus at room temperature to give a concentrated silica sol having an SiO₂ concentration of 16 % by weight. The resulting sol had a specific gravity of 1.100, a pH value of 9.54, a viscosity of 72 mPa.s (cp), a molar ratio of SiO₂/Na₂O (by titrimetric method) of 90.7, a CaO content of 0.11 % by weight, a Cl content of 2.8 ppm, an SO₄ content of 34 ppm, an NO₃ content of 273 ppm and an electroconductivity of 2010 µS/cm. After concentration, there was no change in the shape of the particles in the concentrated silica sol. The thus concentrated silica sol was stored in a sealed container at 60 °C, which was found stable after one month. The sol was coated on a glass plate and dried, which formed a better film than that formed from a conventional sol.

### EXAMPLE 15

Pure water was added to a commercial acidic aqueous sol containing spherical colloidal silica particles (particle size by BET method: 12 nm, SiO₂ content: 20 % by weight, specific gravity: 1.129, pH: 2.9, viscosity: 2 mPa.s (cp) to prepare a diluted acidic silica sol liquid having an SiO₂ concentration of 3.2 % by weight and a pH value of 3.65. 2000 g of the thus diluted acidic silica sol was put in a 3 liter glass container, and 11.7 g of aqueous 10 wt.% calcium nitrate solution was added thereto with stirring and stirring was continued at room temperature for 10 minutes. 14.2 g of aqueous 10 wt.% sodium hydroxide solution was further added thereto also with stirring at room temperature and stirring was continued for 10 minutes. The resulting mixture had an SiO₂ content of 3.16 % by weight, a pH value of 10.47, a molar ratio of SiO₂/Na₂O of 60 and a CaO content of 200 ppm. Next, the mixture was fed into a 2.5 liter stainless steel autoclave and heat-treated at 130 °C for 6 hours. The resulting sol was proved, by electromicroscopic observation, to contain colloidal silica particles having an elongated shape. The particles had a thickness of 15 nm and a length of from 50 to 300 nm. They had a particle size of 146 nm as measured by dynamic light-scattering method. They also had a particle size of 14.7 nm as calculated out by BET method. The sol contained an SiO₂ content of 3.16 % by weight and had a molar ratio of SiO₂/Na₂O (by titrimetric method) of 70 and a pH value of 10.18. It contained no gel. Next, the thus prepared thin silica sol liquid containing colloidal silica particles with an elongated shape was concentrated by passing through an ultrafiltration apparatus at room temperature to give a concentrated silica sol having an SiO₂ concentration of 10.2 % by weight. The resulting sol had a specific gravity of 1.063, a pH value of 9.98, a viscosity of 42 mPa.s (cp), a molar ratio of SiO₂/Na₂O (by titrimetric method) of 89, a CaO content of 0.07 % by weight, a Cl content of 3 ppm, an SO₄ content of 34 ppm, an NO₃ content of 273 ppm and an electroconductivity of 1900 µS/cm. After concentration, there was no change in the shape of the particles in the concentrated silica sol. The thus concentrated silica sol was stored in a sealed container at 60 °C, which was found stable after one month. The sol was coated on a glass plate and dried, which formed a better film than that formed from a conventional sol.

### EXAMPLE 16

Pure water was added to an acidic aqueous silica sol obtained by treating a commercial alkaline aqueous sol containing spherical colloidal silica particles (particle size by BET method: 8 nm, SiO₂ content: 30 % by weight, pH: 9.9, specific gravity: 1.21, viscosity: 5 mPa.s (cp) with a hydrogen type cationic exchange resin, to prepare a diluted acidic aqueous silica sol having an SiO₂ concentration of 3.6 % by weight and a pH value of 3.52. 2000 g of the thus diluted acidic silica sol liquid was put in a 3 liter glass container, and 9.0 g of aqueous 10 wt.% magnesium chloride solution was added thereto with stirring and stirring was continued at room temperature for 10 minutes. Next, 13.7 g of aqueous 10 wt.% sodium hydroxide solution was further added thereto also with stirring at room temperature and stirring was continued for 10 mintues. The resulting mixture had an SiO₂ content of 3.57 % by weight, a pH value of 9.83, a molar ratio of SiO₂/Na₂O of 70 and an MgO content of 190 ppm. Next, the mixture was fed into a 3 liter stainless steel autoclave and heat-treated at 140 °C for 10 hours. The resulting silica sol was proved, by electromicroscopic observation, to contain colloidal silica particles having an elongated shape. The particles had a thickness of about 11 nm and a length of from 40 to 250 nm. They had a particle size of 88 nm as measured by dynamic light-scattering method. They also had a particle size of 12.9 nm as calculated out by BET method. The sol contained an SiO₂ content of 3.57 % by weight and had a molar ratio of SiO₂/Na₂O (by titrimetric method) of 81 and a pH value of 9.83. It contained no gel. Next, the thus prepared thin silica sol liquid containing colloidal silica particles with an elongated shape was concentrated by passing through an ultrafiltration apparatus at room temperature to give a concentrated silica sol having an SiO₂ concentration of 15.6 % by weight. The resulting sol had a specific gravity of 1.098, a pH value of 9.70, a viscosity of 83 mPa.s (cp), a molar ratio of SiO₂/Na₂O (by titrimetric method) of 103, an MgO content of 823 ppm, a Cl content of 171 ppm, an SO₄ content of 22 ppm, an NO₃ content of 4 ppm and an electroconductivity of 2095 µS/cm. After concentration, there was no change in the shape of the particles in the concentrated silica sol. The thus concentrated silica sol was stored in a sealed container at 60 °C, which was found stable after one month. The sol was coated on a glass plate and dried, which formed a better film than that formed from a conventional sol.

### EXAMPLE 17

Pure water was added to the acidic aqueous silica sol obtained by treating the same commercial alkaline aqueous silica sol as that used in Example 14 with a hydrogen type cationic exchange resin, to prepare a diluted acidic silica sol liquid having an SiO₂ concentration of 3.2 % by weight and a pH value of 3.27. 2000 g of the thus diluted silica sol liquid was put in a 3 liter glass container, and 4.0 g of aqueous 10 wt.% calcium chloride solution was added thereto with stirring and stirring was continued at room temperature for 10 minutes. Next, 2.44 g of monoethanolamine was further added thereto also with stirring at room temperature and stirring was continued for 10 minutes. The resulting mixture had an SiO₂ content of 3.19 % by weight, a pH value of 9.35, a molar ratio of SiO₂/monoethanolamine of 27 and a CaO content of 100 ppm. Next, the mixture was fed into a 3 liter stainless steel autoclave and heat-treated at 135 °C for 10 hours. The resulting silica sol was proved, by electromicroscopic observation, to contain colloidal silica particles having an elongated shape. The particles had a thickness of from 10 to 15 nm and a length of from 50 to 200 nm. They had a particle size of 54.0 nm as measured by dynamic light-scattering method. They also had a particle size of 10.3 nm as calculated out by BET method. The sol contained an SiO₂ content of 3.19 % by weight and had a molar ratio of SiO₂/monoethanolamine (by titrimetric method) of 36 and a pH value of 9.45. It contained no gel. Next, the thus prepared thin silica sol liquid containing colloidal silica particles with an elongated shape was concentrated by passing through an ultrafiltration apparatus at room temperature to give a concentrated silica sol having an SiO₂ concentration of 1.52 % by weight. The resulting sol had a specific. gravity of 1.098, a pH value of 9.21, a viscosity of 8 mPa.s (cp), a molar ratio of SiO₂/monoethanolamine (by titrimetric method) of 47, a CaO content of 470 ppm, a Cl content of 3 ppm, an SO₄ content of 35 ppm, an NO₃ content of 290 ppm and an electroconductivity of 1300 µS/cm. After concentration, there was no change in the shape of the particles in the concentrated silica sol. The thus concentrated silica sol was stored in a sealed container at 60 °C, which was found stable after one month. The sol was coated on a glass plate and dried, which formed a better film than that obtained from a conventional sol.

### EXAMPLE 18

Pure water was added to the same commercial acidic aqueous silica sol as that used in Example 15 to prepare a diluted acidic silica sol liquid having an SiO₂ concentration of 10 % by weight and a pH value of 3.1. 2000 g of the diluted acidic silica sol was put in a 3 liter glass container, and 23.4 g of 10 wt.% calcium nitrate solution was added thereto with stirring and stirring was continued at room temperature for 10 minutes. 26.2 g of aqueous 10 wt.% sodium hydroxide solution was further added thereto also with stirring at room temperature and stirring was continued for 10 minutes. The resulting mixture had an SiO₂ content of 9.76 % by weight, a pH value of 9.79, a molar ratio of SiO₂/Na₂O of 100 and a CaO content of 400 ppm. Next, the mixture was fed into a 2.5 liter stainless steel autoclave and heat-treated at 200 °C for 6 hours. The resulting silica sol was proved, by electromicroscopic observation, to contain colloidal silica particles having an elongated shape. The particles had a thickness of about 20 nm and a length of from 100 to 400 nm. They had a particle size of 203 nm as measured by dynamic light-scattering method. They also had a particle size of 26.4 nm as calculated out by BET method. The sol contained an SiO₂ content of 9.76 % by weight and had a specific gravity of 1.061, a pH value of 10.22, a viscosity of 12 mPa.s (cp), a molar ratio of SiO₂/Na₂O (by titrimetric method) of 117, a CaO content of 400 ppm, a Cl content of 3 ppm, an SO₄ content of 7 ppm, an NO₃ content of 880 ppm and an electroconductivity of 2170 µS/cm. It contained no gel. Next, the concentrated silica sol was stored in a sealed container at 60 °C, which was found stable after one month. The sol was coated on a glass plate and dried, which formed a better film than that obtained from a conventional sol.

### COMPARATIVE EXAMPLE 7

Water was added to a commercial acidic aqueous silica sol containing spherical colloidal silica particles (average particle diameter: 40 nm, SiO₂ content: 20 wt.%, specific gravity: 1.120, pH: 3.0, viscosity: 2 mPa.s (cp)) to prepare a diluted acidic silica sol liquid having an SiO₂ concentration of 3.2 % by weight and a pH value of 3.1. 2000 g of the diluted acidic silica sol liquid was put in a 3 liter glass container, and 10.5 g of aqueous 10 wt.% calcium nitrate solution was added thereto with stirring and stirring was continued at room temperature for 10 minutes. 12.2 g of aqueous 10 wt.% sodium hydroxide solution was further added thereto also with stirring at room temperature and stirring was continued for 10 mintues. The resulting mixture had an SiO₂ content of 3.16 % by weight, a pH value of 9.3, a molar ratio of SiO₂/Na₂O of 70 and a CaO content of 180 ppm. Next, the mixture was fed into a 2.5 liter stainless steel autoclave and heat-treated at 130 °C for 6 hours. As a result of electromicroscopic observation of the resulting silica sol, the colloidal particles in the sol were found to be spherical particles being linked to each other. The particles were not extended with a uniform thickness.

### COMPARATIVE EXAMPLE 8

The same commercial acidic aqueous silica sol as that used in Example 14 was concentrated by ultrafiltration to give a concentrated silica sol (particle diameter by BET method: 12 nm, SiO₂ content: 30 % by weight, specific gravity: 1.1208, pH: 2.9, viscosity: 2.5 mPa.s (cp)). 2000 g of the thus concentrated silica sol was put in a 3 liter glass container, and 87.9 g of aqueous 10 wt.% calcium nitrate solution was added thereto with stirring and stirring was continued at room temperature for 10 minutes. 80 g of aqueous 10 wt.% sodium hydroxide solution was further added thereto also with stirring at room temperature and stirring was continued for 10 minutes. The mixture had an SiO₂ content of 27.7 % by weight, a pH value of 9.85, a molar ratio of SiO₂/Na₂O of 100 and a CaO content of 1500 ppm. Next, the mixture was fed into a 2.5 liter stainless steel autoclave and heat-treated at 130 °C for 6 hours. As a result, a gel was formed in the container, which was no more fluid.

As is obvious from the above-mentioned explanation and examples, the sol of the present invention has an improved property and is superior to any other conventional silica sol in various uses. Components which may be added to conventional silica sols for preparing compositions may also be added to the silica sol of the present invention, and the resulting composition has higher tackifying property and gelling property than the corresponding conventional compositions. As examples of components which may be used together with the silica sol of the present invention, there may be mentioned the aforesaid conventional and known spherical silica sols, non-spherical silica sols prepared by peptization method, alkali metal silicates, hydrolyzed liquids of alkyl silicates, alumina sols, other metal oxide sols, water-soluble resins, resin emulsions, tackifiers, de-foaming agents, surfactants, refractory powders, metal powders, bentonite, pigments, coupling agents and so on.

When the silica sol of the present invention is mixed with various materials for coating compositions which have heretofore been used, inorganic coating compositions, heat-resistant coating compositions, anti-corrosive coating compositions and inorganic-organic composite coating compositions can be prepared. The dry film formed by coating a composition containing the silica sol of the present invention has few pin holes and is almost free from cracks. The coated film is sufficiently smooth and even and is soft so as to be able to absorb a shock as applied thereto. In addition, the coated film is also excellent in the adhesiveness to the substrate, the water-retentivity and anti-static capacity. Further, the baked film formed from an inorganic coating composition containing the silica sol of the present invention has a good heat-resistance.

Incorporation of various adhesive components to the silica sol of the present invention gives inorganic adhesives, heat-resistance adhesives and inorganic-organic composite adhesives.

The said coating compositions and adhesives containing the silica sol of the present invention may be applied to the surface of various substrates, for example, glasses, ceramics, metals, plastics, woods, fibers and papers.

The silica sol of the present invention may be impregnated into felt-like substances such as usual glass fibers, ceramic fibers and other inorganic fibers. The silica sol of the present invention may be mixed with these short fibers. When the felt-like substance impregnated with the silica sol of the present invention is dried, felt-like substance having high strength can be obtained. When the mixture of the silica sol of the present invention and the above-mentioned short fiber(s) is formed into shapes of sheet, mat and so on and then dried, sheets, mats and molded products having high strength can also be obtained. There is no occurrence of any dusting on the surfaces of these thus obtained felt-like products, sheets, mats and other molded products, as occurs in the case of using the conventional silica sols. Accordingly, the colloidal silica particles of silica sol of the present invention which are used as binding agent commonly for these inorganic fibers and so on show the fact that there is little migration from the inside of these inorganic fibers-product to the surface thereof. These dried products may be provided for the use of heat-resisting thermal insulators and others as an improved product.

The silica sol of the present invention can also be used as a surface-treating agent for substrates having a porous texture. For instance, when applied to the surface of a hardened article of concrete, mortar, cement, gypsum or clay, the silica sol penetrates from the surface into the inside of the article, and after being dried, it gives an improved surface layer on the article. The silica sol of the present invention may also be used as a surface-treating agent for natural and synthetic fibers, fibrous products thereof, papers and woods. It may also be used as a sealant for metal castings.

Moulds for metal casting may be prepared from a slurry containing the silica sol of the present invention and a refractory powder. The slurry may rapidly be gelled, when dried, at a high gelling speed, so that the productivity of moulds from the slurry is high. In addition, the cracking percentage in production of moulds from the slurry is low.

When the silica sol of the present invention is mixed with an organic resin emulsion or a resin solution and then the dispersion medium is removed from the resulting mixture, a resin composition containing silica in the resins may be obtained. As the resin compositions have favorable properties, such as high strength, stain-resistance, high surface hardness and hydrophilicity, improved fibers, films or shaped articles may be obtained from the said mixture of resin composition. In addition, preferred resin compositions, fibers, films and shaped articles may also be obtained by dispersing the colloidal silica particles of the silica sol of the present invention in a polymerizable monomer and then polymerizing the resulting monomer mixture.

When the silica sol of the present invention is added to a catalyst carrier component, adsorbent component or shaping refractory component and the resulting mixture is shaped, a preferred catalyst carrier, adsorbent or refractory article may be shaped.

The silica sol of the present invention may also be used as a tackifier or gelling agent. For instance, the silica sol of the present invention may be added to an acid, which is to be used in the form of a paste or plastic, such as phosphoric acid, oxalic acid, butyric acid or chromic acid, whereby the intended pasty or plastic acid may be prepared. The silica sol of the present invention can be added to a diluted sulfuric acid for an electrolytic solution for battery, whereby the acid may be gelled to be non-fluid and the electrolyte in the battery does not flow out even when the battery lies sideways. In order to strengthen a soft and weak ground, a grouting composition of a gelling liquid is injected into the ground. An improved grouting composition can be obtained by adding a gelling agent such as salts to the silica sol of the present invention. Accordingly, strengthening of a soft and weak ground as well as water flow-resistance may be attained by the use of the improved grouting composition.

The silica sol of the present invention has a high stability and has a property of being finally and irreversibly converted into a gel by removal of the medium therefrom. Since the colloidal silica particles constituting the sol have an elongated shape, as mentioned above, the resulting gel displays a unique and particular characteristic to be derived from the sol, during gellation of the sol or after the gel has been hardened.

## Claims

1. A stable silica, sol having an SiO₂ concentration of from 0.5 to 30 % by weight comprising a liquid medium and a plurality of colloidal particles of amorphous silica, each of said colloidal particles having an elongated shape, said shape characterized by a particle size (D₁) of 40 to 500 nm as measured by dynamic light-scattering method and an elongation in only one plane and a uniform thickness of from 5 to 40 nm along the elongation as observed by electronic microscope with a degree of elongation of from 5 to 30 in terms of size ratio D₁/D₂, wherein D₂ represents a diameter calculated by equation D₂ = 2720/S in which S represents a specific surface area in m²/g of said colloidal particles of amorphous silica.

2. The stable silica sol of claim 1, wherein said liquid medium is water and said sol has a pH value of from 8.5 to 11.

3. The stable silica sol of claim 1, wherein said liquid medium is water and said sol has a pH value of from 2 to 4.

4. The stable silica sol of claim 1, wherein said liquid medium is an organic solvent.

5. A method for preparing a stable alkaline aqueous silica sol having an SiO₂ concentration of from 1 to 6 % by weight comprising a liquid medium and a plurality of colloidal particles of amorphous silica, each of said particles having an elongated shape, said shape characterized by a particle size (D₁) of 40 to 300 nm as measured by dynamic light-scattering method and an elongation in only one plane and a uniform thickness of from 5 to 20 nm along the elongation as observed by electronic microscope with a degree of elongation of from 5 to 30 in terms of size ratio D₁/D₂, wherein D₂ represents a diameter calculated by equation D₂ = 2720/S in which S represents a specific surface area in m²/g of said colloidal particles of amorphous silica, comprising the following steps (a), (b) and (c):
(a) mixing an aqueous solution containing a water-soluble calcium salt or magnesium salt or a mixture of said calcium salt and said magnesium salt with an aqueous colloidal liquid of an active silicic acid containing from 1 to 6 % by weight of SiO₂ and having a pH value of from 2 to 4 in an amount of from 1500 to 8500 ppm as a weight ratio of CaO or MgO or a mixture thereof with respect to SiO₂ of the said active silicic acid;
(b) mixing an alkali metal hydroxide or a water-soluble organic base or a water-soluble silicate of said alkali metal hydroxide or said organic base with said aqueous solution in a molar ratio of SiO₂/M₂O from 20 to 200, where SiO₂ indicates the total silica content derived from said active silicic acid and the silica content of said water-soluble silicate, and M indicates an alkali metal atom of said alkali metal hydroxide or an organic base molecule of said wafter-soluble organic base; and
(c) heating the mixture obtained in step (b) at 60 to 150 °C for 0.5 to 40 hours.

6. The method of claim 5 for preparing a stable alkaline aqueous silica sol, wherein said active silicic acid-containing aqueous colloidal liquid to be used in step (a) is one obtained by bringing an aqueous solution of sodium water glass having a molar ratio of SiO₂/Na₂O from 1 to 4.5 and an SiO₂ concentration of from 1 to 6 % by weight into contact with a hydrogen type cationic exchange resin .

7. The method of claim 5 for preparing a stable alkaline aqueous silica sol, wherein said aqueous solution to be used in step (a) contains calcium chloride, magnesium chloride, calcium nitrate, Magnesium nitrate, magnesium sulfate, calcium sulfamate, magnesium sulfamate, calcium formate, magnesium formate, calcium acetate or magnesium acetate or a mixture thereof in an amount of from 2 to 20 % by weight.

8. The method of claim 5 for preparing a stable alkaline aqueous silica sol, wherein said alkali metal hydroxide or said water-soluble organic base or water-soluble silicate thereof to be used in step (b) is sodium hydroxide, potassium hydroxide, lithium hydroxide, tetraethanolammonium hydroxide, monomethyltriethanolammonium hydroxide, tetramethylammonium hydroxide, monoethanolamine, diethanolamine, triethanolamine, N,N-dimethylethanolamine, N-(β-aminomethyl)ethanolamine, N-methylethanolamine, propanolamine, morpholine or a silicate of said organic base, sodium silicate, potassium silicate.

9. A method for preparing a stable alkaline aqueous silica sol having an SiO₂ concentration of from 1 to 6 % by weight comprising a liquid medium and a plurality of colloidal particles of amorphous silica having an elongated shape, said shape characterized by having a particle size (D₁) of 40 to 300 nm as measured by dynamic light-scattering method and having an elongation in only one plane in a uniform thickness of from 5 to 20 nm along the elongation as observed by electronic microscope with a degree of elongation of from 5 to 30 in terms of size ratio D₁/D₂, wherein D₂ represents a diameter calculated by equation D₂ = 2720/S in which S represents a specific surface area in m²/g of said colloidal particles of amorphous silica, comprising the following steps (a), (b) and (c):
(a) mixing an aqueous solution containing a water-soluble calcium salt or magnesium salt or a mixture of said calcium salt and said magnesium salt with an aqueous colloidal liquid of an active silicic acid containing from 1 to 6 % by weight of SiO₂ and having a pH value higher than 4 and up to 5 in an amount of from 1500 to 8500 ppm as a weight ratio of CaO or MgO or a mixture of said CaO and MgO to SiO₂ of the said active silicic acid;
(b) mixing an alkali metal hydroxide or a water-soluble organic base or a water-soluble silicate of said alkali metal hydroxide or said organic base with said aqueous solution obtained in step (a) in a molar ratio of SiO₂/M₂O from 20 to 200, where SiO₂ indicates the total silica content derived from said active silicic acid and from said silicate, and M indicates an alkali metal atom of said alkali metal hydroxide or an organic base molecule of said organic base; and
(c) heating the mixture obtained in step (b) at 60 to 250 °C for 0.5 to 40 hours.

10. The method of claim 9 for preparing a stable alkaline aqueous silica sol, wherein said active silicic acid-containing aqueous colloidal liquid to be used in step (a) is one obtained by bringing an aqueous solution of sodium water glass having a molar ratio of SiO₂/Na₂O from 1 to 4.5 and an SiO₂ concentration of from 1 to 6 % by weight into contact with a hydrogen type cationic exchange resin, said active silicic acid-containing aqueous colloidal liquid having an SiO₂ concentration of from 1 to 6 % by weight and a pH value higher than 4 and up to 5, and not containing colloidal silica particles having a particle size of 3 nm or more.

11. The method of claim 9 for preparing a stable alkaline aqueous silica sol, wherein said aqueous solution to be used in step (a) contains calcium chloride, magnesium chloride, calcium nitrate, magnesium nitrate, magnesium sulfate, calcium sulfamate, magnesium sulfamate, calcium formate, magnesium formate, calcium acetate or magnesium acetate or a mixture thereof in an amount of from 2 to 20 % by weight.

12. The method of claim 9 for preparing a stable alkaline aqueous silica sol, wherein said alkali metal hydroxide or water-soluble organic base or water-soluble silicate of said alkali metal hydroxide or said organic base to be used in step (b) is sodium hydroxide, potassium hydroxide, lithium hydroxide, tetraethanolammonium hydroxide, monomethyltriethanolammonium hydroxide, tetramethylammonium hydroxide, monoethanolamine, diethanolamine, triethanolamine, N,N-dimethylethanolamine, N-(β-aminomethyl)ethanolamine, N-methylethanolamine, propanolamine, morpholine or a silicate of said organic base, sodium silicate, potassium silicate, or a mixture of said organic base, said sodium silicate and said potassium silicate.

13. A method for preparing a stable alkaline aqueous silica sol having an SiO₂ concentration of from 1 to 30 % by weight comprising a liquid medium and a plurality of colloidal particles of amorphous silica having an elongated shape, said shape characterized by a particle size (D₁) of 40 to 300 nm as measured by dynamic light-scattering method and having an elongation in only one plane and a uniform thickness of from 5 to 20 nm along the elongation as observed by electronic microscope with a degree of elongation of from 5 to 30 in terms of size ratio D₁/D₂, wherein the D₂ represents a diameter calculated by equation D₂ = 2720/S in which S represents a specific surface area in m²/g of said colloidal particles of amorphous silica, said method comprising removing anions and water from said silica sol prepared in step (c) of claim 5 to the anion concentration of 0.1 % by weight or less and the SiO₂ concentration of from 1 to 30 % by weight.

14. The method of claim 13 for preparing a stable alkaline aqueous silica sol, wherein said removal of said anions and water is effected by ultrafiltration.

15. The method of claim 14 for preparing a stable alkaline aqueous silica sol, further including the step of adding an alkali metal hydroxide or a water-soluble organic base or a water soluble silicate of said alkali metal hydroxide or said organic base to the silica sol so as to keep the molar ratio of SiO₂/M₂O (where M has the same meaning as defined above) in the sol to fall within the range of from 20 to 300.

16. The method of claim 15 for preparing a stable alkaline aqueous silica sol, wherein said alkali metal hydroxide or said water-soluble organic base or said water-soluble silicate of said alkali metal hydroxide or said organic base to be added is sodium hydroxide, potassium hydroxide, lithium hydroxide. tetraethanolammonium hydroxide, monomethyltriethanolammonium hydroxide, tetramethylammonium hydroxide, monoethanolamine, diethanolamine, triethanolamine, N,N-dimethylethanolamine, N-(β-aminomethyl)ethanolamine, N-methylethanolamine, monopropanolamine, morpholine or a silicate of the said organic base, sodium silicate, potassium silicate, or a mixture thereof.

17. The method of claim 13 for preparing a stable alkaline aqueous silica sol, wherein said removal of said anions and said water is effected by treatment of said silica sol with a hydroxy type anionic exchange resin so as to remove said anions therefrom followed by evaporation of the resulting sol to remove said water therefrom.

18. A method for preparing a stable alkaline aqueous silica sol having an SiO₂ concentration of from 0.5 to 25 % by weight comprising a liquid medium and a plurality of colloidal particles of amorphous silica having an elongated shape, said shape characterized by a particle size (D₁) of 40 to 500 nm as measured by dynamic light-scattering method and an elongation in only one plane and a uniform thickness of from 5 to 40 nm along the elongation as observed by electronic microscope with a degree of elongation of from 5 to 30 in terms of size ratio D₁/D₂, wherein the D₂ represents a diameter calculated by equation D₂ = 2720/S in which S represents a specific surface area in m²/g of said colloidal particles of amorphous silica, the method comprising the following steps (a'), (b') and (c'):
(a') mixing an aqueous solution containing a water-soluble calcium salt or magnesium salt or a mixture of said calcium salt and said magnesium salt with an aqueous acidic silica sol containing a plurality of colloidal silica particles having an average particle diameter of from 3 to 30 nm, said acidic silica sol having from 0.5 to 25 % of SiO₂ by weight and having a pH value of from 1 to 5, in an amount of from 0.15 to 1.00 % by weight of CaO, MgO or a mixture of said CaO and MgO to SiO₂ of said acidic silica sol;
(b') mixing an alkali metal hydroxide or a water-soluble organic base or a water-soluble silicate of said alkali metal hydroxide or said organic base with said liquid as obtained in step (a') in a molar ratio of SiO₂/M₂O from 20 to 300, where SiO₂ indicates the total silica content derived from said acidic silica sol and from said silicate, and M indicates an alkali metal atom of the said alkali metal hydroxide or an organic base molecule of said organic base; and
(c') heating the mixture obtained in step (b') at 60 to 300 °C for 0.5 to 40 hours to form said colloidal silica particles in said heated mixture having an elongated shape and having a thickness larger than the particle size of said colloidal silica particles of said step (a').

19. The method of claim 18 for preparing a stable alkaline aqueous silica sol, wherein said aqueous solution in step (a') is an aqueous solution containing calcium chloride, magnesium chloride, calcium nitrate, magnesium nitrate, magnesium sulfate, calcium sulfamate, magnesium sulfamate, calcium formate, magnesium formate, calcium acetate or magnesium acetate or a mixture thereof in an amount of from 2 to 20 % by weight of said aqueous solution.

20. The method of claim 18 for preparing a stable alkaline aqueous silica sol, wherein said alkali metal hydroxide or said water-soluble organic base or said water-soluble silicate thereof to be used in step (b) is sodium hydroxide, potassium hydroxide, lithium hydroxide, tetraethanolammonium hydroxide, monomethyltriethanolammonium hydroxide, tetramethylammonium hydroxide, monoethanolamine, diethanolamine, triethanolamine, N,N-dimethylethanolamine, N-(β-aminomethyl)ethanolamine, N-methylethanolamine, monopropanolamine, morpholine or a silicate of the said organic base, sodium silicate, potassium silicate, or a mixture thereof.

21. A method for preparing a stable alkaline aqueous silica sol having an SiO₂ concentration of from 1 to 40 % by weight comprising a liquid medium and a plurality of colloidal particles of amorphous silica having an elongated shape, said shape characterized by a particle size (D₁) of 40 to 500 nm as measured by dynamic light-scattering method and an elongation in only one plane in a uniform thickness of from 5 to 40 nm along the elongation as observed by electronic microscope with a degree of elongation of from 5 to 30 in terms of size ratio D₁/D₂, wherein the D₂ represents a diameter calculated by equation D₂ = 2720/S in which S represents a specific surface area in m²/g of said colloidal particles of amorphous silica, the method comprising removing anions and water from said silica sol prepared in step (c') of claim 18 such that the anion concentration is 0.1 % by weight or less and the SiO₂ concentration of said silica sol of from 1 to 40 % by weight.

22. The method of claim 21 for preparing a stable alkaline aqueous silica sol, wherein said removal of said anions and water is effected by ultrafiltration.

23. The method of claim 22 for preparing a stable alkaline aqueous silica sol, further including the step of adding an alkali metal hydroxide or a water-soluble organic base or a water-soluble silicate thereof to the silica sol so as to keep the molar ratio of SiO₂/M₂O (where M has the same meaning as defined above) in the sol to fall within the range of from 20 to 300.

24. The method of claim 22 for preparing a stable alkaline aqueous silica sol, wherein said alkali metal hydroxide or said water-soluble organic base or said water-soluble silicate of said alkali metal hydroxide or said organic base to be added is sodium hydroxide, potassium hydroxide, lithium hydroxide, tetraethanolammonium hydroxide, monomethyltriethanolammonium hydroxide, tetramethylammonium hydroxide, monoethanolamine, diethanolamine, triethanolamine, N,N-dimethylethanolamine, N-(β-aminomethyl)ethanolamine, N-methylethanolamine, monopropanolamine, morpholine or a silicate of said organic base, sodium silicate, or potassium silicate.

25. The method of claim 21 for preparing a stable alkaline aqueous silica sol, wherein said removal of said anions and said water is effected by treating said silica sol with a hydroxy type anionic exchange resin to remove the anions therefrom followed by evaporating the resulting silica sol to remove water therefrom.

## Patentansprüche

1. Stabiles Silicasol mit einer SiO₂-Konzentration von 0,5 bis 30 Gew.%, umfassend ein flüssiges Medium und eine Vielzahl von kolloidalen Partikeln aus amorphem Silica, wobei jedes dieser kolloidalen Partikel eine verlängerte Form hat, und wobei diese Form **gekennzeichnet** ist durch eine Partikelgrösse (D₁) von 40 bis 500 nm, gemessen durch dynamische Lichtstreuung, und eine Verlängerung in nur einer Ebene und eine einheitliche Dicke von 5 bis 40 nm entlang der Verlängerung, wie mit einem Elektronenmikroskop beobachtet wird, mit einem Verlängerungsgrad von 5 bis 30, ausgedrückt als Grössenverhältnis D₁/D₂, wobei D₂ einen Durchmesser darstellt, der durch die Gleichung D₂ = 2720/S berechnet wird, wobei S eine spezifische Oberfläche der kolloidalen amorphen Silicapartikel in m²/g darstellt.

2. Stabiles Silicasol gemäss Anspruch 1, dadurch **gekennzeichnet,** dass das flüssige Medium Wasser ist und das Sol einen pH-Wert von 8,5 bis 11 hat.

3. Stabiles Silicasol gemäss Anspruch 1, dadurch **gekennzeichnet,** dass das flüssige Medium Wasser ist und das Sol einen pH-Wert von 2 bis 4 hat.

4. Stabiles Silicasol gemäss Anspruch 1, dadurch **gekennzeichnet,** dass das flüssige Medium ein organisches Lösungsmittel ist.

5. Verfahren zur Herstellung eines stabilen alkalischen, wässrigen Silicasols mit einer SiO₂-Konzentration von 1 bis 6 Gew.% aus einem flüssigen Medium und einer Vielzahl von kolloidalen amorphen Silicapartikeln, wobei jedes dieser Partikel eine verlängerte Form hat und diese Form **gekennzeichnet** ist durch eine Partikelgrösse (D₁) von 40 bis 300 nm, gemessen durch dynamische Lichtstreuung, und eine Verlängerung in nur einer Ebene und eine einheitliche Dicke von 5 bis 20 nm entlang der Verlängerung, beobachtet durch ein Elektronenmikroskop, mit einem Verlängerungsgrad von 5 bis 30, ausgedrückt als Grössenverhältnis D₁/D₂, wobei D₂ einen Durchmesser darstellt, der durch die Gleichung D₂ = 2720/S berechnet wird, worin S eine spezifische Oberfläche in m²/g dieser kolloidalen amorphen Silicapartikel darstellt, umfassend die folgenden Schritte (a), (b) und (c):
(a) Mischen einer wässrigen Lösung, die ein wasserlösliches Calciumsalz oder Magnesiumsalz oder eine Mischung dieses Calcium- und Magnesiumsalzes enthält, mit einer wässrigen kolloidalen Flüssigkeit, einer aktiven Kieselsäure, die 1 bis 6 Gew.% SiO₂ enthält und einen pH-Wert von 2 bis 4 hat, in einer Menge von 1500 bis 8500 ppm als Gewichtsverhältnis von CaO oder MgO oder einer Mischung davon bezüglich des SiO₂ der aktiven Kieselsäure;
(b) Mischen eines Alkalimetallhydroxids oder einer wasserlöslichen organischen Base oder eines wasserlöslichen Silicats des Alkalimetallhydroxids oder der organischen Base mit der besagten wässrigen Lösung in einem Molverhältnis von SiO₂/M₂O von 20 bis 200, wobei SiO₂ den Gesamt-Silicagehalt bezeichnet, der aus der aktiven Kieselsäure und dem Silicagehalt des wasserlöslichen Silicats stammt, und M ein Alkalimetallatom des Alkalimetallhydroxids oder ein organisches Basemolekül der wasserlöslichen organischen Base bezeichnet; und
(c) Erhitzen der in Schritt (b) erhaltenen Mischung auf 60 bis 150°C während 0,5 bis 40 Stunden.

6. Verfahren gemäss Anspruch 5 zur Herstellung eines stabilen wässrigen Silicasols, dadurch **gekennzeichnet,** dass die aktive Kieselsäure-haltige wässrige kolloidale Flüssigkeit, die in Schritt (a) verwendet wird, erhalten wird durch Inkontaktbringen einer wässrigen Lösung von Natriumwasserglas mit einem Molverhältnis von SiO₂/Na₂O von 1 bis 4,5 und einer SiO₂-Konzentration von 1 bis 6 Gew.% mit einem kationischen Austauscherharz vom Wasserstoff-Typ.

7. Verfahren gemäss Anspruch 5 zur Herstellung eines stabilen alkalischen wässrigen Silicasols, dadurch **gekennzeichnet,** dass die in Schritt (a) verwendete wässrige Lösung Calciumchlorid, Magnesiumchlorid, Calciumnitrat, Magnesiumnitrat, Magnesiumsulfat, Calciumsulfamat, Magnesiumsulfamat, Calciumformiat, Magnesiumformiat, Calciumacetat oder Magnesiumacetat oder eine Mischung davon in einer Menge von 2 bis 20 Gew.% enthält.

8. Verfahren gemäss Anspruch 5 zur Herstellung eines stabilen alkalischen wässrigen Silicasols, dadurch **gekennzeichnet,** dass das Alkalimetallhydroxid oder die wasserlösliche organische Base oder deren wasserlösliches Silicat, die in Schritt (b) verwendet werden, Natriumhydroxid, Kaliumhydroxid, Lithiumhydroxid, Tetraethanolammoniumhydroxid, Monomethyltriethanolammoniumhydroxid, Tetramethylammoniumhydroxid, Monoethanolamin, Diethanolamin, Triethanolamin, N,N-Dimethylethanolamin, N-(β-Aminomethyl)ethanolamin, N-Methylethanolamin, Propanolamin, Morpholin oder ein Silicat dieser organischen Base, Natriumsilicat oder Kaliumsilicat ist.

9. Verfahren zur Herstellung eines stabilen alkalischen wässrigen Silicasols mit einer SiO₂-Konzentration von 1 bis 6 Gew.% aus einem flüssigen Medium und einer Vielzahl von amorphen Silicapartikeln mit einer verlängerten Form, wobei diese Form dadurch **gekennzeichnet** ist, dass sie eine Partikelgrösse D₁ von 40 bis 300 nm, gemessen durch dynamische Lichtstreuung, und eine Verlängerung in nur einer Ebene in einer einheitlichen Dicke von 5 bis 20 nm entlang der Verlängerung hat, wie beobachtet durch ein Elektronenmikroskop, mit einem Verlängerungsgrad von 5 bis 30, ausgedrückt als Grössenverhältnis D₁/D₂, wobei D₂ einen Durchmesser darstellt, der durch die Gleichung D₂ = 2720/S berechnet wird, wobei S eine spezifische Oberfläche in m²/g der kolloidalen amorphen Silicapartikel darstellt, umfassend die folgenden Schritte (a), (b) und (c):
(a) Mischen einer wässrigen Lösung, die ein wasserlösliches Calciumsalz oder Magnesiumsalz oder eine Mischung dieses Calcium- und Magnesiumsalzes enthält, mit einer wässrigen kolloidalen Flüssigkeit einer aktiven Kieselsäure, die 1 bis 6 Gew.% SiO₂ enthält und einen pH-Wert von mehr als 4 und bis zu 5 hat, in einer Menge von 1500 bis 8500 ppm als Gewichtsverhältnis von CaO oder MgO oder Mischung dieses CaO und MgO bezogen auf SiO₂ der besagten aktiven Kieselsäure;
(b) Mischen eines Alkalimetallhydroxids oder einer wasserlöslichen organischen Base oder eines wasserlöslichen Silicats des Alkalimetallhydroxids oder der organischen Base mit der in Schritt (a) erhaltenen wässrigen Lösung in einem Molverhältnis von SiO₂/M₂O von 20 bis 200, wobei SiO₂ den Gesamt-Silicagehalt bezeichnet, der von der aktiven Kieselsäure und von dem Silicat herrührt, und M ein Alkalimetallatom des Alkalimetallhydroxids oder ein organisches Basemolekül der organischen Base bezeichnet; und
(c) Erhitzen der in Schritt (b) erhaltenen Mischung auf 60 bis 250°C während 0,5 bis 40 Stunden.

10. Verfahren gemäss Anspruch 9, zur Herstellung eines stabilen alkalischen wässrigen Silicasols, dadurch **gekennzeichnet,** dass die aktive Kieselsäure-haltige wässrige kolloidale Flüssigkeit, die in Schritt (a) verwendet wird, durch Inkontaktbringen einer wässrigen Lösung eines Natriumwasserglases mit einem Molverhältnis von SiO₂/Na₂O von 1 bis 4,5 und einer SiO₂-Konzentration von 1 bis 6 Gew.%, mit einem kationischen Austauscherharz vom Wasserstoff-Typ erhalten wird, wobei diese aktive Kieselsäure-haltige wässrige kolloidale Flüssigkeit mit einer SiO₂-Konzentration von 1 bis 6 Gew.% und einen pH-Wert von mehr als 4 und bis zu 5 hat und keine kolloidalen Silicapartikel mit einer Partikelgrösse von 3 nm oder mehr enthält.

11. Verfahren gemäss Anspruch 9 zur Herstellung eines stabilen alkalischen wässrigen Silicasols, dadurch **gekennzeichnet,** dass die in Schritt (a) verwendete wässrige Lösung Calciumchlorid, Magnesiumchlorid, Calciumnitrat, Magnesiumnitrat, Magnesiumsulfat, Calciumsulfamat, Magnesiumsulfamat, Calciumformiat, Magnesiumformiat, Calciumacetat oder Magnesiumacetat oder eine Mischung davon in einer Menge von 2 bis 20 Gew.% enthält.

12. Verfahren gemäss Anspruch 9 zur Herstellung eines stabilen alkalischen wässrigen Silicasols, dadurch **gekennzeichnet,** dass das Alkalimetallhydroxid oder die wasserlösliche organische Base oder das wasserlösliche Silicat des Alkalimetallhydroxids oder der organischen Base, die in Schritt (b) verwendet werden, Natriumhydroxid, Kaliumhydroxid, Lithiumhydroxid, Tetraethanolammoniumhydroxid, Monomethyltriethanolammoniumhydroxid, Tetramethylammoniumhydroxid, Monoethanolamin, Diethanolamin, Triethanolamin, N,N-Dimethylethanolamin, N-(β-Aminomethyl)ethanolamin, N-Methylethanolamin, Propanolamin, Morpholin oder ein Silicat der organischen Base, Natriumsilicat, Kaliumsilicat oder eine Mischung der organischen Base, des Natriumsilicats und des Kaliumsilicats ist.

13. Verfahren zur Herstellung eines stabilen alkalischen wässrigen Silicasols mit einer SiO₂-Konzentration von 1 bis 30 Gew.% aus einem flüssigen Medium und einer Vielzahl von kolloidalen amorphen Silicapartikeln mit einer verlängerten Form, wobei die Form **gekennzeichnet** ist durch eine Partikelgrösse (D₁) von 40 bis 300 nm, gemessen durch dynamische Lichtstreuung, und dadurch, dass sie eine Verlängerung in nur einer Ebene und eine einheitliche Dicke von 5 bis 20 nm entlang der Verlängerung hat, beobachtet durch ein Elektronenmikroskop, mit einem Verlängerungsgrad von 5 bis 30, ausgedrückt als Grössenverhältnis D₁/D₂, wobei D₂ einen Durchmesser darstellt, der durch die Gleichung D₂ = 2720/S berechnet wird, wobei S eine spezifische Oberfläche in m²/g der kolloidalen amorphen Silicapartikel darstellt, wobei das Verfahren die Entfernung von Anionen und Wasser von dem in Schritt (c) von Anspruch 5 hergestellten Silicasol auf eine Anionenkonzentration von 0,1 Gew.% oder weniger und eine SiO₂-Konzentration von 1 bis 30 Gew.% umfasst.

14. Verfahren gemäss Anspruch 13 zur Herstellung eines stabilen alkalischen wässrigen Silicasols, dadurch **gekennzeichnet,** dass die Entfernung dieser Anionen und von Wasser durch Ultrafiltration bewirkt wird.

15. Verfahren gemäss Anspruch 14 zur Herstellung eines stabilen alkalischen wässrigen Silicasols, das weiterhin den Schritt der Zugabe eines Alkalimetallhydroxids oder einer wasserlöslichen organischen Base oder eines wasserlöslichen Silicats des Alkalimetallhydroxids oder der organischen Base zum Silicasol einschliesst, so dass das Molverhältnis von SiO₂/M₂O (worin M dieselbe Bedeutung wie oben hat) im Sol im Bereich von 20 bis 300 gehalten wird.

16. Verfahren gemäss Anspruch 15 zur Herstellung eines stabilen alkalischen wässrigen Silicasols, dadurch **gekennzeichnet,** dass das Alkalimetallhydroxid oder die wasserlösliche organische Base oder das wasserlösliche Silicat des Alkalimetallhydroxids oder der organischen Base, die zugegeben werden, Natriumhydroxid, Kaliumhydroxid, Lithiumhydroxid, Tetraethanolammoniumhydroxid, Monomethyltriethanolammoniumhydroxid, Tetramethylammoniumhydroxid, Monoethanolamin, Diethanolamin, Triethanolamin, N,N-Dimethylethanolamin, N-(β-Aminomethyl)ethanolamin, N-Methylethanolamin, Monopropanolamin, Morpholin oder ein Silicat der organischen Base, Natriumsilicat, Kaliumsilicat oder eine Mischung davon ist.

17. Verfahren gemäss Anspruch 13 zur Herstellung eines stabilen alkalischen wässrigen Silicasols, dadurch **gekennzeichnet,** dass die Entfernung der Anionen und von Wasser ausgeführt wird durch Behandlung dieses Silicasols mit einem Anionen-Austauscherharz vom Hydroxy-Typ, so dass Anionen davon entfernt werden, gefolgt von Eindampfen des resultierenden Sols zur Entfernung von Wasser.

18. Verfahren zur Herstellung eines stabilen alkalischen wässrigen Silicasols mit einer SiO₂-Konzentration von 0,5 bis 25 Gew.% aus einem flüssigen Medium und einer Vielzahl von kolloidalen amorphen Silicapartikeln mit einer verlängerten Form, wobei diese Form **gekennzeichnet** ist durch eine Partikelgrösse D₁ von 40 bis 500 nm, gemessen durch dynamische Lichtstreuung, und eine Verlängerung in nur einer Ebene und eine einheitliche Dicke von 5 bis 40 nm entlang der Verlängerung, beobachtet durch ein Elektronenmikroskop, mit einem Verlängerungsgrad von 5 bis 30, ausgedrückt als Grössenverhältnis D₁/D₂, wobei D₂ einen Durchmesser darstellt, der durch die Gleichung D₂ = 2720/S berechnet wird, wobei S eine spezifische Oberfläche in m²/g der kolloidalen amorphen Silicapartikel darstellt, wobei das Verfahren die folgenden Schritte (a'), (b') und (c') umfasst:
(a') Mischen einer wässrigen Lösung, die ein wasserlösliches Calciumsalz oder Magnesiumsalz oder eine Mischung des Calcium- und Magnesiumsalzes enthält, mit einem wässrigen sauren Silicasol, das eine Vielzahl von kolloidalen Silicapartikeln mit einem durchschnittlichen Partikeldurchmesser von 3 bis 30 nm enthält, wobei dieses saure Silicasol von 0,5 bis 25 Gew.% SiO₂ enthält und einen pH-Wert von 1 bis 5 hat, in einer Menge von 0,15 bis 1,00 Gew.% CaO, MgO oder einer Mischung von CaO und MgO, bezogen auf SiO₂ dieses sauren Silicasols;
(b') Mischen eines Alkalimetallhydroxids oder einer wasserlöslichen organischen Base oder eines wasserlöslichen Silicats des Alkalimetallhydroxids oder der organischen Base mit dieser Flüssigkeit, wie sie in Schritt (a') erhalten wurde, in einem Molverhältnis von SiO₂/M₂O von 20 bis 300, wobei SiO₂ den Gesamt-Silicagehalt bezeichnet, der abgeleitet ist aus dem genannten sauren Silicasol und dem Silicat, und M ein Alkalimetallatom des Alkalimetallhydroxids oder ein organisches Basemolekül der organischen Base bezeichnet; und
(c') Erhitzen der in Schritt (b') erhaltenen Mischung auf 60 bis 300°C während 0,5 bis 40 Stunden zur Bildung der kolloidalen Silicapartikel in der erhitzten Mischung, die eine verlängerte Form haben und eine Dicke haben, die grösser ist als die Partikelgrösse der kolloidalen Silicapartikel des Schritts (a').

19. Verfahren gemäss Anspruch 18 zur Herstellung eines stabilen alkalischen wässrigen Silicasols, dadurch **gekennzeichnet,** dass die wässrige Lösung in Schritt (a') eine wässrige Lösung ist, die Calciumchlorid, Magnesiumchlorid, Calciumnitrat, Magnesiumnitrat, Magnesiumsulfat, Calciumsulfamat, Magnesiumsulfamat, Calciumformiat, Magnesiumformiat, Calciumacetat oder Magnesiumacetat oder eine Mischung davon in einer Menge von 2 bis 20 Gew.% der wässrigen Lösung enthält.

20. Verfahren gemäss Anspruch 18 zur Herstellung eines stabilen wässrigen Silicasols, dadurch **gekennzeichnet,** dass das Alkalimetallhydroxid oder die wasserlösliche organische Base oder das wasserlösliche Silicat davon, das in Schritt (b) verwendet wird, Natriumhydroxid, Kaliumhydroxid, Lithiumhydroxid, Tetraethanolammoniumhydroxid, Monomethyltriethanolammoniumhydroxid, Tetramethylammoniumhydroxid, Monoethanolamin, Diethanolamin, Triethanolamin, N,N-Dimethylethanolamin, N-(β-Aminomethyl)ethanolamin, N-Methylethanolamin, Monopropanolamin, Morpholin oder ein Silicat der organischen Base, Natriumsilicat, Kaliumsilicat oder eine Mischung davon ist.

21. Verfahren zur Herstellung eines stabilen alkalischen wässrigen Silicasols mit einer SiO₂-Konzentration von 1 bis 40 Gew.% aus einem flüssigen Medium und einer Vielzahl von kolloidalen amorphen Silicapartikeln mit einer verlängerten Form, wobei diese Form **gekennzeichnet** ist durch eine Partikelgrösse D₁ von 40 bis 500 nm, gemessen durch dynamische Lichtstreuung, und eine Verlängerung in nur einer Ebene in einer einheitlichen Dicke von 5 bis 40 nm entlang der Verlängerung, wie mit einem Elektronenmikroskop beobachtet wird, mit einem Verlängerungsgrad von 5 bis 30, ausgedrückt als Grössenverhältnis D₁/D₂, worin D₂ einen Durchmesser darstellt, der durch die Gleichung D₂ = 2720/S berechnet wird, wobei S eine spezifische Oberfläche in m²/g der kolloidalen amorphen Silicapartikel darstellt, wobei das Verfahren die Entfernung von Anionen und von Wasser aus dem in Schritt (c') von Anspruch 18 hergestellten Silicasol umfasst, so dass die Anionenkonzentration 0,1 Gew.% oder weniger ist und die SiO₂-Konzentration dieses Silicasols von 1 bis 40 Gew.% beträgt.

22. Verfahren gemäss Anspruch 21 zur Herstellung eines stabilen alkalischen wässrigen Silicasols, dadurch **gekennzeichnet,** dass die Entfernung der Anionen und von Wasser durch Ultrafiltration bewirkt wird.

23. Verfahren gemäss Anspruch 22 zur Herstellung eines stabilen alkalischen, wässrigen Silicasols, das weiterhin den Schritt der Zugabe eines Alkalimetallhydroxids oder einer wasserlöslichen organischen Base oder eines wasserlöslichen Silicats davon zum Silicasol einschliesst, so dass das Molverhältnis von SiO₂/M₂O (wobei M dieselbe Bedeutung wie oben hat) im Sol im Bereich von 20 bis 300 gehalten wird.

24. Verfahren gemäss Anspruch 22 zur Herstellung eines stabilen alkalischen wässrigen Silicasols, dadurch **gekennzeichnet,** dass das Alkalimetallhydroxid oder die wasserlösliche organische Base oder das wasserlösliche Silicat des Alkalimetallhydroxids oder der organischen Base, die zugegeben werden, Natriumhydroxid, Kaliumhydroxid, Lithiumhydroxid, Tetraethanolammoniumhydroxid, Monomethyltriethanolammoniumhydroxid, Tetramethylammoniumhydroxid, Monoethanolamin, Diethanolamin, Triethanolamin, N,N-Dimethylethanolamin, N-(β-Aminomethyl)ethanolamin, N-Methylethanolamin, Monopropanolamin, Morpholin oder ein Silicat der organischen Base, Natriumsilicat oder Kaliumsilicat ist.

25. Verfahren gemäss Anspruch 21, zur Herstellung eines stabilen wässrigen Silicasols, dadurch **gekennzeichnet,** dass die Entfernung der Anionen und von Wasser durch Behandlung des Silicasols mit einem anionischen Austauscherharz vom Hydroxy-Typ ausgeführt wird, um die Anionen daraus zu entfernen, gefolgt von Eindampfen des resultierenden Silicasols zur Entfernung von Wasser.

## Revendications

1. Sol stable de silice ayant une concentration en SiO₂ de 0,5 à 30 % en poids, ce sol comprenant un milieu liquide et plusieurs particules colloïdales de silice amorphe, chacune desdites particules colloïdales ayant une forme allongée, ladite forme étant caractérisée par une taille de particules (D₁) de 40 à 500 nm, selon une mesure effectuée par la méthode de dispersion dynamique de la lumière et un allongement dans un plan seulement ainsi qu'une épaisseur uniforme de 5 à 40 nm le long de cet allongement, quand on l'observe au microscope électronique, avec un degré d'allongement de 5 à 30 en terme de rapport entre les tailles D₁/D₂, le symbole D₂ représentant un diamètre calculé d'après l'équation D₂ = 2720/S, dans laquelle S représente une aire de surface spécifique en m²/g desdites particules colloïdales de silice amorphe.

2. Sol stable de silice selon la revendication 1, dans lequel ledit milieu liquide est de l'eau, et ledit sol a une valeur de pH de 8,5 à 11.

3. Sol stable de silice selon la revendication 1, dans lequel ledit milieu liquide est de l'eau, et ledit sol a une valeur de pH de 2 à 4.

4. Sol stable de silice selon la revendication 1, dans lequel ledit milieu liquide est un solvant organique.

5. Procédé pour préparer un sol alcalin aqueux stable de silice ayant une concentration en SiO₂ de 1 à 6% en poids, ce sol comprenant un milieu liquide et plusieurs particules colloïdales de silice amorphe, chacune desdites particules ayant une forme allongée, ladite forme étant caractérisée par une taille des particules (D₁) de 40 à 300 nm, telle que mesurée par une méthode de dispersion dynamique de la lumière, et ayant un allongement dans un plan seulement et une épaisseur uniforme de 5 à 20 nm le long de l'allongement, selon l'observation faite au microscope électronique, avec un degré d'allongement de 5 à 30 en termes de rapport des tailles D₁/D₂, où D₂ représente un diamètre calculé d'après l'équation D₂ = 2720/S, dans laquelle S représente une aire de surface spécifique en m²/g desdites particules colloïdales de silice amorphe, le procédé comprenant les étapes (a), (b) et (c) suivantes :
(a) le mélangeage d'une solution aqueuse contenant un sel de calcium ou un sel de magnésium hydrosolubles ou un mélange dudit sel de calcium et dudit sel de magnésium, avec un liquide colloïdal aqueux d'un acide silicique actif contenant de 1 à 6 % en poids de SiO₂ et ayant une valeur de pH de 2 à 4, en une quantité de 1 500 à 8 500 ppm en rapport pondéral de CaO ou de MgO ou d'un de leurs mélanges par rapport à SiO₂ dudit acide silicique actif;
(b) le mélangeage d'un hydroxyde de métal alcalin ou d'une base organique hydrosoluble ou d'un silicate hydrosoluble de cet hydroxyde de métal alcalin ou de cette base organique avec ladite solution aqueuse, selon un rapport molaire de SiO₂/M₂O de 20 à 200, SiO₂ indiquant la teneur en silice totale provenant dudit acide silicique actif et de la teneur en silice dudit silicate hydrosoluble, et M indiquant un atome de métal alcalin de cet hydroxyde de métal alcalin, ou une molécule de base organique de ladite base organique hydrosoluble ; et
(c) la soumission du mélange, obtenu à l'étape (b) à un chauffage à 60 jusqu'à 150°C durant 1/2 h à 40 h.

6. Procédé selon la revendication 5 pour préparer un sol aqueux alcalin stable de silice, dans lequel ledit liquide colloïdal aqueux contenant l'acide silicique actif, à utiliser à l'étape (a), est un liquide obtenu par la mise en contact d'une solution aqueuse de silicate de sodium ("verte à l'eau"), présentant un rapport molaire de SiO₂/Na₂O de 1 à 4,5 et ayant une concentration en SiO₂ de 1 à 6 % en poids, avec une résine échangeuse de cations de type hydrogène.

7. Procédé selon la revendication 5 pour préparer un sol aqueux alcalin stable de silice, dans lequel ladite solution aqueuse à utiliser à l'étape (a) contient du chlorure de calcium, du chlorure de magnésium, du nitrate de calcium, du nitrate de magnésium, du sulfate de magnésium, du sulfamate de calcium, du sulfamate de magnésium, du formiate de calcium, du formiate de magnésium, de l'acétate de calcium ou de l'acétate de magnésium ou un de leurs mélanges, en une quantité de 2 à 20 % en poids.

8. Procédé selon la revendication 5 pour préparer un sol aqueux alcalin stable de silice, dans lequel ledit hydroxyde de métal alcalin ou ladite base organique hydrosoluble ou le silicate hydrosoluble à utiliser à l'étape (b) est l'hydroxyde de sodium, l'hydroxyde de potassium, l'hydroxyde de lithium, l'hydroxyde de tétraéthanolammonium, l'hydroxyde de monométhyltriéthanolammonium, l'hydroxyde de tétraméthylammonium, la monoéthanolamine, la diéthanolamine, la triéthanolamine, la N,N-diméthyléthanolamine, la N-(β-aminométhyl)éthanolamine, la N-méthyléthanolamine, la propanolamine, la morpholine ou un silicate de cette base organique, le silicate de sodium, le silicate de potassium.

9. Procédé pour préparer un sol aqueux alcalin stable de silice ayant une concentration en SiO₂ de 1 à 6 % en poids, ce sol comprenant un milieu liquide et plusieurs particules colloïdales de silice amorphe ayant une forme allongée, ladite forme étant caractérisée par une taille particulaire (D₁) de 40 à 300 nm, telle que mesurée par la méthode dynamique de dispersion de la lumière, et ayant un allongement dans un seul plan en une épaisseur uniforme de 5 à 20 nm le long de l'allongement, selon l'observation faite au microscope électronique, avec un degré d'allongement de 5 à 30 en terme de rapport entre les dimensions D₁/D₂, où D₂ représente un diamètre calculé d'après l'équation D₂ = 2720/S, où S représente une aire de surface spécifique, en m²/g, desdites particules colloïdales de silice amorphe, le procédé comprenant les étapes (a), (b) et (c) suivantes :
(a) le mélangeage d'une solution aqueuse, contenant un sel de calcium ou un sel de magnésium hydrosoluble ou un mélange dudit sel de calcium et dudit sel de magnésium avec un liquide colloïdal aqueux d'un acide silicique actif contenant de 1 à 6 % en poids de SiO₂ et ayant une valeur de pH supérieure à 4 et allant jusqu'à 5, en une quantité de 1 500 à 8 500 ppm en rapport pondéral de CaO ou de MgO ou d'un mélange de CaO et de MgO par rapport à SiO₂ dudit acide silicique actif;
(b) le mélangeage d'un hydroxyde de métal alcalin ou d'une base organique hydrosoluble ou d'un silicate hydrosoluble de cet hydroxyde de métal alcalin ou de ladite base organique avec ladite solution aqueuse obtenue à l'étape (a), selon un rapport molaire de SiO₂/M₂O de 20 à 200, où SiO₂ indique la teneur totale en silice provenant de l'acide silicique actif et dudit silicate, et M indique un atome de métal alcalin dudit hydroxyde de métal alcalin ou une molécule de base organique de ladite base organique ; et
(c) la soumission du mélange, obtenu à l'étape (b), à un chauffage' à 60 jusqu'à 250°C durant 1/2 h à 40 h.

10. Procédé selon la revendication 9 pour préparer un sol aqueux alcalin stable de silice, dans lequel ledit liquide colloïdal aqueux, contenant de l'acide silicique actif, à utiliser à l'étape (a) est un liquide obtenu par la mise d'une solution aqueuse de silicate de sodium, ayant un rapport molaire de SiO₂/Na₂O de 1 à 4,5 et ayant une concentration en SiO₂ de 1 à 6 % en poids, en contact avec une résine échangeuse de cations de type hydrogène, ledit liquide colloïdal aqueux contenant de l'acide silicique actif ayant une concentration en SiO₂ de 1 à 6 % en poids et une valeur de pH supérieure à 4 et allant jusqu'à 5, et ne contenant pas de particules de silice colloïdale ayant une taille particulaire égale ou supérieure à 3 nm.

11. Procédé selon la revendication 9 pour préparer un sol aqueux alcalin stable de silice, dans lequel ladite solution aqueuse à utiliser à l'étape (a) contient du chlorure de calcium, du chlorure de magnésium, du nitrate de calcium, du nitrate de magnésium, du sulfate de magnésium, du sulfamate de calcium, du sulfamate de magnésium, du formiate de calcium, du formiate de magnésium, de l'acétate de calcium ou de l'acétate de magnésium ou un de leurs mélanges, en une quantité de 2 à 20 % en poids.

12. Procédé selon la revendication 9 pour préparer un sol aqueux alcalin stable de silice, dans lequel ledit hydroxyde de métal alcalin ou ladite base organique hydrosoluble ou le silicate hydrosoluble dudit hydroxyde de métal, alcalin ou de ladite base organique, à utiliser à l'étape (b), est de l'hydroxyde de sodium, de l'hydroxyde de potassium, de l'hydroxyde de lithium, de l'hydroxyde de tétraéthanolammonium, de l'hydroxyde de monométhyltriéthanolammonium, de l'hydroxyde de tétraméthylammonium, de la monoéthanolamine, de la diéthanolamine, de la triéthanolamine, de la N,N-diméthyléthanolamine, de la N-(β-aminométhyl)éthanolamine, de la N-méthyléthanolamine, de la propanolamine, de la morpholine ou un silicate de ladite base organique, du silicate de sodium, du silicate de potassium, ou un mélange de ladite base organique, dudit silicate de sodium et dudit silicate de potassium.

13. Procédé pour préparer un sol aqueux alcalin stable de silice ayant une concentration en SiO₂ de 1 à 30 % en poids, comprenant un milieu liquide et plusieurs particules colloïdales de silice amorphe ayant une forme allongée, ladite forme étant caractérisée par une taille de particules (D₁) de 40 à 300 nm, selon la mesure faite par une méthode dynamique de dispersion de la lumière, et ayant un allongement dans un plan seulement et une épaisseur uniforme de 5 à 20 nm le long de l'allongement, quand on observe au microscope électronique, avec un degré d'allongement de 5 à 30 en termes de rapport entre les tailles D₁/D₂, où D₂ représente un diamètre calculé par l'équation D₂ = 2720/S, où S représente une aire de surface spécifique, en m²/g, desdites particules colloïdales de silice amorphe, ledit procédé comprenant l'enlèvement d'anions et de l'eau dudit sol de silice, préparé à l'étape (c) de la revendication 5, jusqu'à une concentration en anions égale ou inférieure à 0,1 % en poids et une concentration en SiO₂ de 1 à 30 % en poids.

14. Procédé selon la revendication 13, pour préparer un sol aqueux alcalin stable de silice, dans lequel ledit enlèvement desdits anions et de l'eau est effectué par ultrafiltration.

15. Procédé selon la revendication 14, pour préparer un sol aqueux alcalin stable de silice, comprenant en outre l'étape consistant à ajouter un hydroxyde de métal alcalin ou une base organique hydrosoluble ou un silicate hydrosoluble dudit hydroxyde de métal alcalin ou de ladite base organique au sol de silice afin de maintenir dans le sol le rapport molaire de SiO₂M₂O (où M a le même sens que celui défini ci-dessus) entre 20 et 300.

16. Procédé selon la revendication 15, pour préparer un sol aqueux alcalin stable de silice, procédé dans lequel ledit hydroxyde de métal alcalin ou ladite base organique hydrosoluble ou ledit silicate hydrosoluble de cet hydroxyde de métal alcalin ou de cette base organique à ajouter est l'hydroxyde de sodium, l'hydroxyde de potassium, l'hydroxyde de lithium, l'hydroxyde de tétraéthanolammonium, l'hydroxyde de monométhyltriéthanolammonium, l'hydroxyde de tétraméthylammonium, la monoéthanolamine, la diéthanolamine, la triéthanolamine, la N,N-diméthyléthanolamine, la N-(β-aminométhyl)éthanolamine, la N-méthyléthanolamine, la monopropanolamine, la morpholine ou un silicate de cette base organique, le silicate de sodium, le silicate de potassium ou un de leurs mélanges.

17. Procédé selon la revendication 13, pour préparer un sol aqueux alcalin stable de silice, procédé dans lequel ledit enlèvement desdits anions et de ladite eau est réalisé par traitement de ce sol de silice par une résine échangeuse d'anions du type hydroxyle, de façon à enlever lesdits anions de ce sol, opération suivie d'une évaporation du sol résultant pour enlever ladite eau.

18. Procédé pour préparer un sol aqueux alcalin stable de silice ayant une concentration en SiO₂ de 0,5 à 25 % en poids, comprenant un milieu liquide et plusieurs particules colloïdales de silice amorphe ayant une forme allongée, ladite forme étant caractérisée par une taille particulaire (D₁) de 40 à 500 nm, selon la mesure faite par une méthode dynamique de dispersion de la lumière, et un allongement dans un plan seulement et une épaisseur uniforme de 5 à 40 nm le long de l'allongement, selon l'observation faite au microscope électronique, avec un degré d'allongement de 5 à 30 en termes de rapport entre les tailles D₁/D₂, rapport dans lequel D₂ représente un diamètre calculé à l'aide de l'équation D₂ = 2720/S, dans laquelle S représente une aire de surface spécifique, en m²/g, desdites particules colloïdales de silice amorphe, le procédé comprenant les étapes (a'), (b') et (c') suivantes :
(a') le mélangeage d'une solution aqueuse, contenant un sel hydrosoluble de calcium ou un sel hydrosoluble de magnésium, ou un mélange de ce sel de calcium et de ce sel de magnésium, avec un sol acide aqueux de silice contenant plusieurs particules colloïdales de silice ayant un diamètre particulaire moyen de 3 à 30 nm, ledit sol acide de silice contenant de 0,5 à 25 % en poids de SiO₂ et ayant une valeur du pH comprise entre 1 et 5, en une quantité de 0,15 à 1,00 % en poids de CaO, de MgO ou d'un mélange de CaO et de MgO par rapport à SiO₂ dudit sol acide de silice ;
(b') le mélangeage d'un hydroxyde de métal alcalin ou d'une base organique hydrosoluble ou d'un silicate hydrosoluble de cet hydroxyde, de métal alcalin ou de cette base organique avec ledit liquide, tel qu'obtenu à l'étape (a'), selon un rapport molaire de SiO₂/M₂O de 20 à 300, où SiO₂ indique la teneur totale en silice provenant de ce sol acide de silice et dudit silicate, et M désigne un atome de métal alcalin dudit hydroxyde de métal alcalin ou une molécule de base organique de ladite base organique ; et
(c') la soumission du mélange obtenu à l'étape (b') à un chauffage à 60 jusqu'à 300°C durant 1/2 h à 40 h pour former dans ce mélange chauffé lesdites particules colloïdales de silice ayant une forme allongée et ayant une épaisseur supérieure à la taille particulaire desdites particules colloïdales de silice de l'étape (a').

19. Procédé selon la revendication 18, pour préparer un sol aqueux alcalin stable de silice, dans lequel ladite solution aqueuse utilisée à l'étape (a') est une solution aqueuse contenant du chlorure de calcium, du chlorure de magnésium, du nitrate de calcium, du nitrate de magnésium, du sulfate de magnésium, du sulfamate de calcium, du sulfamate de magnésium, du formiate de calcium, du formiate de magnésium, de l'acétate de calcium ou de l'acétate de magnésium ou un de leurs mélanges, en une quantité de 2 à 20 % du poids de ladite solution aqueuse.

20. Procédé selon la revendication 18, pour préparer un sol aqueux alcalin stable de silice, procédé dans lequel ledit hydroxyde de métal alcalin ou ladite base organique hydrosoluble ou ledit silicate hydrosoluble de l'hydroxyde ou de la base, à utiliser à l'étape (b), est de l'hydroxyde de sodium, de l'hydroxyde de potassium, de l'hydroxyde de lithium, de l'hydroxyde de tétraéthanolammonium, de l'hydroxyde de monométhyltriéthanolammonium, de l'hydroxyde de tétraméthylammonium, de la monoéthanolamine, de la diéthanolamine, de la triéthanolamine, de la N,N-diméthyléthanolamine, de la N-(β-aminométhyl)éthanolamine, de la N-méthyléthanolamine, de la monopropanolamine, de la morpholine ou un silicate de ladite base organique, du silicate de sodium, du silicate de potassium ou un de leurs mélanges.

21. Procédé pour préparer un sol alcalin aqueux stable de silice, ayant une concentration en SiO₂ de 1 à 40 % en poids, comprenant un milieu liquide et plusieurs particules colloïdales de silice amorphe ayant une forme allongée, ladite forme étant caractérisée par une taille particulaire (D₁) de 40 à 500 nm, telle que mesurée par une méthode dynamique de dispersion de la lumière, et ayant un allongement dans un plan seulement en une épaisseur uniforme de 5 à 40 nm le long de l'allongement tel qu'observé au microscope électronique, avec un degré d'allongement de 5 à 30 en termes de rapport entre les tailles D₁/D₂, dans lequel D₂ représente un diamètre calculé à l'aide de l'équation D₂ = 2720/S, dans laquelle S représente une aire de surface spécifique, en m²/g, desdites particules colloïdales de silice amorphe, le procédé comprenant l'enlèvement d'anions et de l'eau dudit sol de silice préparé à l'étape (c') de la revendication 18 de façon que la concentration des anions soit égale ou inférieure à 0,1 % en poids et que la concentration en SiO₂ de ce sol de silice se situe entre 1 et 40 % en poids.

22. Procédé selon la revendication 21, pour préparer un sol aqueux alcalin stable de silice, procédé dans lequel ledit enlèvement desdits anions et de l'eau est réalisé par ultrafiltration.

23. Procédé selon la revendication 22, pour préparer un sol aqueux alcalin stable de silice, ce procédé comprenant en outre l'étape consistant à ajouter un hydroxyde de métal alcalin ou une base organique hydrosoluble ou un silicate hydrosoluble de l'hydroxyde ou de la base au sol de silice de façon à maintenir dans le sol le rapport molaire SiO₂/M₂O (dans lequel M a le même sens que celui défini ci-dessus) entre 20 et 300.

24. Procédé selon la revendication 22, pour préparer un sol aqueux alcalin stable de silice, procédé dans lequel ledit hydroxyde de métal alcalin ou ladite base organique hydrosoluble ou ledit silicate hydrosoluble de cet hydroxyde de métal alcalin ou de cette base organique, à ajouter, est l'hydroxyde de sodium, l'hydroxyde de potassium, l'hydroxyde de lithium, l'hydroxyde de tétraéthanolammonium, l'hydroxyde de monométhyltriéthanolammonium, l'hydroxyde de tétraméthylammonium, la monoéthanolamine, la diéthanolamine, la triéthanolamine, la N,N-diméthyléthanolamine, la N-(β-aminométhyl)éthanolamine, la N-méthyléthanolamine, la monopropanolamine, la morpholine, ou un silicate de ladite base organique, le silicate de sodium ou le silicate de potassium.

25. Procédé selon la revendication 21, pour préparer un sol aqueux alcalin stable de silice, procédé dans lequel ledit enlèvement desdits anions et de ladite eau est réalisé par traitement dudit sol de silice par une résine échangeuse d'anions de type hydroxyle pour enlever les anions du sol, opération suivie de l'évaporation du sol de silice résultant pour en enlever l'eau.
